# EUROPEAN PATENT APPLICATION

(11) **EP 4 553 617 A1**
(43) Date of publication of application: **14.05.2025**
(21) Application number: 23854287.2
(22) Date of filing: 08.08.2023
(51) Int. Cl.: G06F 3/01

(54) **DISPLAY METHOD FOR ELECTRONIC DEVICE AND ELECTRONIC DEVICE**

(30) Priority: 15.08.2022 CN 202210975424; 19.09.2022 CN 202211148283
(71) Applicant: Huawei Technologies Co., Ltd., Shenzhen, Guangdong 518129 (CN)
(72) Inventor: XU, Jie, Shenzhen, Guangdong 518129 (CN); LONG, Jiayu, Shenzhen, Guangdong 518129 (CN)
(74) Representative: Goddar, Heinz J.
(86) International application number: PCT/CN2023/111812
(87) International publication number: WO 2024/037384

(57) **Abstract**

This application provides a display method of an electronic device and the electronic device. The method includes: The electronic device is on a first interface, where the first interface includes any one of a screen-off interface, an always on display AOD interface, or a screen saver interface; the electronic device obtains a relationship between a user and the electronic device, where the relationship includes one or more of the following: a distance between the user and the electronic device, an included angle between a motion trajectory of the user and a normal line of the electronic device, and a motion direction of the user; and when the distance between the user and the electronic device meets a preset condition, the electronic device displays at least one of an application frequently used by the user, a program frequently watched by the user, or a time-sensitive event on the first interface or a second interface. According to the method provided in this application, the electronic device is enabled to perform display based on the relationship between the user and the electronic device. This avoids a current situation that an application or an interface frequently used by the user can be started or opened only when a remote control is used, thereby improving user experience.

## Description

This application claims priorities to Chinese Patent Application No. 202210975424.4, filed with the China National Intellectual Property Administration on August 15, 2022, and entitled "DISPLAY METHOD OF ELECTRONIC DEVICE, AND ELECTRONIC DEVICE", and to Chinese Patent Application No. 202211148283.5, filed with the China National Intellectual Property Administration on September 19, 2022, and entitled "DISPLAY METHOD OF ELECTRONIC DEVICE, AND ELECTRONIC DEVICE", both of which are incorporated herein by reference in their entireties.

### TECHNICAL FIELD

This application relates to the field of electronic technologies, and more specifically, to a display method of an electronic device and the electronic device.

### BACKGROUND

As applications or service types of large-screen devices increase, user groups involved are increasingly extensive, including children, young and middle-aged people, elderly users, and the like. Usually, a user needs to use a remote control to manually select or set a required application or a service on a large-screen device. However, there are many steps for entering the application only by using the remote control, and an interaction path is long and complex. This leads to poor user experience, and is especially inconvenient for the elderly or children.

Therefore, how to quickly start an application or a service that is frequently used on an electronic device without using a remote control is a problem that needs to be urgently resolved currently.

### SUMMARY

This application provides a display method of an electronic device and the electronic device, to obtain a relationship between a user and the electronic device to enable the electronic device to perform display, thereby resolving a problem in a related technology that an application or an interface frequently used by the user can be started or opened only by relying on a remote control. This improves user experience.

According to a first aspect, a display method of an electronic device is provided. The method may be performed by the electronic device or a chip used in the electronic device. The method includes: displaying, by the electronic device, a first interface, where the first interface includes any one of a screen-off interface, an always on display AOD interface, or a screen saver interface; obtaining a relationship between a user and the electronic device, where the relationship includes one or more of the following: a distance between the user and the electronic device, an included angle between a motion trajectory of the user and a normal line of the electronic device, or a motion direction of the user; and displaying, by the electronic device, at least one of an application frequently used by the user, a program frequently watched by the user, or a time-sensitive event on the first interface when the relationship between the user and the electronic device meets a preset condition; or when the relationship between the user and the electronic device meets a preset condition, switching, by the electronic device, from the first interface to a second interface, and displaying at least one of an application frequently used by the user, a program frequently watched by the user, or a time-sensitive event on the second interface.

According to the display method of the electronic device provided in the first aspect, the electronic device senses the distance between the user and the electronic device, the motion trajectory of the user, and the included angle between the motion direction of the user and the normal line of the electronic device, so that the application or the interface frequently used by the user can be quickly displayed on the screen-off interface, the always on display AOD interface, or the screen saver interface. This method avoids a current situation that the application or the interface frequently used by the user can be started or opened only when a remote control is used, and allows the user to open a desired interface more conveniently and quickly. This improves user experience.

In a possible implementation of the first aspect, the preset condition includes at least one of the following: The distance between the user and the electronic device meets a first threshold, the included angle between the motion trajectory of the user and the normal line of the electronic device meets a second threshold, and the motion direction of the user is toward the electronic device.

In a possible implementation of the first aspect, the method further includes: in a case in which at least one of the application frequently used by the user, the program frequently watched by the user, or the time-sensitive event is displayed on the first interface or the second interface, obtaining the relationship between the user and the electronic device; and when the relationship between the user and the electronic device does not meet the preset condition, hiding, by the electronic device, one or more of the following: the application frequently used by the user, the program frequently watched by the user, or the time-sensitive event on the first interface or the second interface; or displaying, by the electronic device, prompt information on the first interface or the second interface. In this implementation, when the user no longer watches content on a display, information on the display is hidden or zoomed out. This can reduce power consumption of the electronic device and save energy.

In a possible implementation of the first aspect, the method further includes: obtaining indication information of the user; and hiding, by the electronic device based on the indication information, one or more of the following: the application frequently used by the user, the interface frequently watched by the user, or the time-sensitive event on the first interface or the second interface. In this implementation, after receiving that the user has learned the time-sensitive event, the electronic device hides the time-sensitive event on the display interface. This can reduce power consumption of the electronic device and save energy.

In a possible implementation of the first aspect, the electronic device displays one or more of the following: the application frequently used by the user, the program frequently watched by the user, or the time-sensitive event on the first interface or the second interface in at least one of a message prompt box, a task card, a floating window, or a floating ball.

In a possible implementation of the first aspect, before it is detected that the relationship between the user and the electronic device meets the preset condition, a first message prompt component is displayed on the first interface, where the first message prompt component includes first content, and the first content indicates at least one of the application frequently used by the user, the program frequently watched by the user, or the time-sensitive event; and the displaying, by the electronic device, at least one of an application frequently used by the user, a program frequently watched by the user, or a time-sensitive event on the first interface when the relationship between the user and the electronic device meets a preset condition includes: displaying, by the electronic device, a second message prompt component on the first interface when the relationship between the user and the electronic device meets the preset condition, where the second message prompt component displays content more detailed than the first content; or when the relationship between the user and the electronic device meets a preset condition, the switching, by the electronic device, from the first interface to a second interface, and displaying at least one of an application frequently used by the user, a program frequently watched by the user, or a time-sensitive event on the second interface includes: when the relationship between the user and the electronic device meets the preset condition, switching, by the electronic device, from the first interface to the second interface, and displaying a second message prompt component on the second interface, where the second message prompt component displays content more detailed than the first content. In this implementation, when the first message prompt component is displayed on the first interface, after the user meets the preset condition, the second message prompt component is displayed on the first interface or the second interface, so that the user can view more detailed information. This improves user experience.

For example, the first message prompt component may be a time-sensitive toast, and the second message prompt component may be a time-sensitive card. Certainly, the first message prompt component and the second message prompt component may alternatively be in another form. This is not limited in embodiments of this application.

In a possible implementation of the first aspect, when the relationship between the user and the electronic device does not meet the preset condition, the electronic device resumes displaying the first message prompt component on the first interface. Alternatively, the electronic device switches from the second interface back to the first interface, and resumes displaying the first message prompt component on the first interface. In this implementation, when the first message prompt component is a time-sensitive toast, the second message prompt component is a time-sensitive card, and the user no longer watches the content on the display, the time-sensitive card becomes a time-sensitive toast. In this way, the user can be reminded again to pay attention to the time-sensitive event while power consumption of the electronic device is reduced and energy is saved.

In a possible implementation of the first aspect, when the first interface includes a first time-sensitive task component, and the relationship between the user and the electronic device meets the preset condition, the method includes: displaying a second time-sensitive task component on the first interface, where the second time-sensitive task component displays detailed information of content of the first time-sensitive task component; and displaying a plurality of task components on the first interface in a process of displaying the second time-sensitive task component and zooming out the second time-sensitive task component, where the plurality of task components are different from the second time-sensitive task component. In this implementation, an application or an interface frequently used by the user may be displayed after the time-sensitive event is displayed.

It should be noted that the first time-sensitive task component may be a time-sensitive toast, and the second time-sensitive task component may be a time-sensitive card. Certainly, the first time-sensitive task component and the second time-sensitive task component may alternatively be in another form. This is not limited in embodiments of this application.

In a possible implementation of the first aspect, when the first interface includes the always on display AOD interface, the relationship between the user and the electronic device meets the preset condition, and the electronic device displays one or more of the following: the application frequently used by the user, the program frequently watched by the user, or the time-sensitive event on the first interface, an AOD of the electronic device is blurred or dimmed on the first interface. In this implementation, the AOD is blurred or dimmed, so that interference of the AOD to a view of the user is reduced, and the user can more intuitively view display information on the first interface.

In a possible implementation of the first aspect, when the first interface includes the screen saver interface, the relationship between the user and the electronic device meets the preset condition, and the electronic device displays one or more of the following: the application frequently used by the user, the program frequently watched by the user, or the time-sensitive event on the first interface, a screen saver of the electronic device is blurred or dimmed on the first interface. In this implementation, the user can more intuitively view display information on the first interface.

In a possible implementation of the first aspect, a display location on the electronic device that is of any one or more of the following: the application frequently used by the user, the program frequently watched by the user, or the time-sensitive event is determined based on a relative location between the user and the electronic device.

For example, the display location may be understood as a distance from the top or the bottom of the screen. That is, when a screen of the electronic device includes an X axis and a Y axis, the display location may be understood as coordinates of the Y axis.

For another example, the display location may also be understood as coordinates of an X axis. Specifically, when the user is at a location to the right of the screen of the electronic device, the display location may be a location to the right of the screen of the electronic device. When the user is at a location to the left of the screen of the electronic device, the display location may be a location to the left of the screen of the electronic device.

In a possible implementation of the first aspect, display content of any one or more of the following: the application frequently used by the user, the program frequently watched by the user, or the time-sensitive event is determined based on user information, and different user information corresponds to different display content.

In a possible implementation of the first aspect, when the electronic device displays one or more of the following: the application frequently used by the user, the program frequently watched by the user, or the time-sensitive event, the method further includes: obtaining a first operation of the user; and in response to the first operation, opening one or more of the following: the application frequently used by the user, the program frequently watched by the user, or the time-sensitive event.

Optionally, the first operation includes at least one of an air gesture, a voice operation, the user approaching the electronic device, or using an OK button of a remote control. In this implementation, at least one of the application frequently used by the user, the program frequently used by the user, or the time-sensitive event may be quickly opened by making an air gesture by the user.

In a possible implementation of the first aspect, when the electronic device displays one or more of the following: the application frequently used by the user, the program frequently watched by the user, or the time-sensitive event, and a focus displayed by the electronic device is on a first application, a first program, or a first time-sensitive event, the method further includes: obtaining a second operation of the user; and in response to the second operation, displaying, by the electronic device, the focus on a second application, a second program, or a second time-sensitive event.

It should be understood that the application frequently used by the user includes the first application, the program frequently watched by the user includes the first program, and the time-sensitive event includes the first time-sensitive event.

Optionally, in response to the second operation, the focus displayed by the electronic device may move. For example, when the focus displayed by the electronic device is on the first application, in response to the second operation, the focus displayed by the electronic device moves to the second application, the second program, or the second time-sensitive event.

Optionally, in response to the second operation, the focus displayed by the electronic device does not move, and an application that needs to be switched, the program that is frequently watched by the user, or the time-sensitive event moves. For example, when the focus displayed by the electronic device is on the first application, in response to the second operation, the second application, the second program, or the second time-sensitive event moves to the focus displayed by the electronic device.

It should be further understood that the first application and the second application may be the same or different, the first program and the second program may be the same or different, and the first time-sensitive event and the second time-sensitive event may be the same or different. For example, when the focus displayed by the electronic device is on the first application, in response to the second operation, the focus displayed by the electronic device may also be on the first program or the first time-sensitive event.

Optionally, the second operation includes at least one of a waving gesture, the user moving leftward or rightward, or using an arrow button of a remote control. In this implementation, switching between different applications, between different programs, and between different time-sensitive events may be quickly implemented or switching among an application, a program, and a time-sensitive event may be implemented by making an air gesture by the user.

According to a second aspect, a communication apparatus is provided. The communication apparatus includes a unit configured to perform the steps according to any one of the first aspect or the possible implementations of the first aspect.

According to a third aspect, a communication apparatus is provided. The communication apparatus includes at least one processor and a memory. The processor is coupled to the memory, and the memory stores program instructions. When the program instructions stored in the memory are executed by the processor, the method according to any one of the first aspect or the possible implementations of the first aspect is performed.

According to a fourth aspect, a communication apparatus is provided. The communication apparatus includes at least one processor and an interface circuit. The at least one processor is configured to perform the method according to any one of the first aspect or the possible implementations of the first aspect.

According to a fifth aspect, an electronic device is provided. The electronic device includes the communication apparatus provided in the second aspect, or the electronic device includes the communication apparatus provided in the third aspect, or the electronic device includes the communication apparatus provided in the fourth aspect.

According to a sixth aspect, a computer program product is provided. The computer program product includes a computer program. When being executed by a processor, the computer program is used to perform the method according to any one of the first aspect or the possible implementations of the first aspect.

According to a seventh aspect, a computer-readable storage medium is provided. The computer-readable storage medium stores a computer program. When being executed, the computer program is used to perform the method according to any one of the first aspect or the possible implementations of the first aspect.

According to an eighth aspect, a chip is provided. The chip includes a processor, configured to: invoke a computer program from a memory and run the computer program, so that a communication device in which the chip is installed performs the method according to any one of the first aspect or the possible implementations of the first aspect.

### BRIEF DESCRIPTION OF DRAWINGS

FIG. 1 is a diagram of a structure of an electronic device 100;
FIG. 2 is a block diagram of a software structure of an electronic device 100;
FIG. 3(a), FIG. 3(b), and FIG. 3(c) are a diagram of a graphical user interface for opening a video for playing according to an embodiment of this application;
FIG. 4(a), FIG. 4(b), and FIG. 4(c) are a diagram of an example of a display interface of an electronic device according to an embodiment of this application;
FIG. 5 is a diagram in which a user triggers an electronic device according to an embodiment of this application;
FIG. 6(a) and FIG. 6(b) are a display diagram of a smart dock relative to a user height according to an embodiment of this application;
FIG. 7(a), FIG. 7(b), and FIG. 7(c) are a diagram of another example of a display interface of an electronic device according to an embodiment of this application;
FIG. 8(a), FIG. 8(b), and FIG. 8(c) are a diagram of still another example of a display interface of an electronic device according to an embodiment of this application;
FIG. 9(a) and FIG. 9(b) are a diagram of display interfaces of electronic devices for different users according to an embodiment of this application;
FIG. 10(a), FIG. 10(b), and FIG. 10(c) are a diagram of still another example of a display interface of an electronic device according to an embodiment of this application;
FIG. 11(a), FIG. 11(b), FIG. 11(c), and FIG. 11(d) are a diagram of still another example of a display interface of an electronic device according to an embodiment of this application;
FIG. 12(a), FIG. 12(b), and FIG. 12(c) are a diagram of still another example of a display interface of an electronic device according to an embodiment of this application;
FIG. 13(a), FIG. 13(b), FIG. 13(c), and FIG. 13(d) are a diagram of still another example of a display interface of an electronic device according to an embodiment of this application;
FIG. 14(a), FIG. 14(b), FIG. 14(c), and FIG. 14(d) are a diagram of still another example of a display interface of an electronic device according to an embodiment of this application;
FIG. 15(a), FIG. 15(b), FIG. 15(c), and FIG. 15(d) are a diagram of still another example of a display interface of an electronic device according to an embodiment of this application;
FIG. 16(a), FIG. 16(b), and FIG. 16(c) are a diagram of an example of a method for starting an application according to an embodiment of this application;
FIG. 17 is a diagram of another example of a method for starting an application according to an embodiment of this application;
FIG. 18(a), FIG. 18(b), and FIG. 18(c) are a diagram of still another example of a method for starting an application according to an embodiment of this application;
FIG. 19(a), FIG. 19(b), and FIG. 19(c) are a diagram of switching an application card according to an embodiment of this application;
FIG. 20 is a schematic flowchart of an implementation of a display method 2000 of an electronic device according to an embodiment of this application; and
FIG. 21 is a diagram of a chip system according to an embodiment of this application.

### DESCRIPTION OF EMBODIMENTS

The following clearly and completely describes the technical solutions in embodiments of this application with reference to the accompanying drawings in embodiments of this application.

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly. It should be further understood that, in embodiments of this application, "one or more" means one or more than two (including two); and "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

"A plurality of" in embodiments of this application indicates two or more. It should be noted that, in the descriptions of embodiments of this application, the terms such as "first" and "second" are merely intended for distinction in description, but should not be construed as indicating or implying relative importance or indicating or implying a sequence.

In addition, aspects or features of this application may be implemented as a method, an apparatus, or a product that uses standard programming and/or engineering technologies. The term "product" used in embodiments of this application covers a computer program that can be accessed from any computer-readable device, carrier, or medium. For example, the computer-readable medium may include but is not limited to: a magnetic storage device (for example, a hard disk, a floppy disk, or a magnetic tape), an optical disc (for example, a compact disc (compact disc, CD) and a digital versatile disc (digital versatile disc, DVD)), a smart card, and a flash memory device (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a radio channel, and various other media that can store, contain, and/or carry instructions and/or data.

An embodiment of this application provides an electronic device. The electronic device is configured to perform a display method of the electronic device provided in this application. The electronic device may be an electronic device with a large display. For example, the electronic device in embodiments of this application may be a smart television, a projection device that can be projected on a wall, a computer, various portable notebook computers, various tablet computers, another electronic device with a display, or the like. Optionally, the electronic device may be a personal digital assistant (personal digital assistant, PDA) with a large display, a handheld device, a computing device, an in-vehicle device, and a wearable device with a large display, an electronic device in a 5G network, an electronic device in an evolved public land mobile communication network (public land mobile network, PLMN), or the like. This is not limited in embodiments of this application.

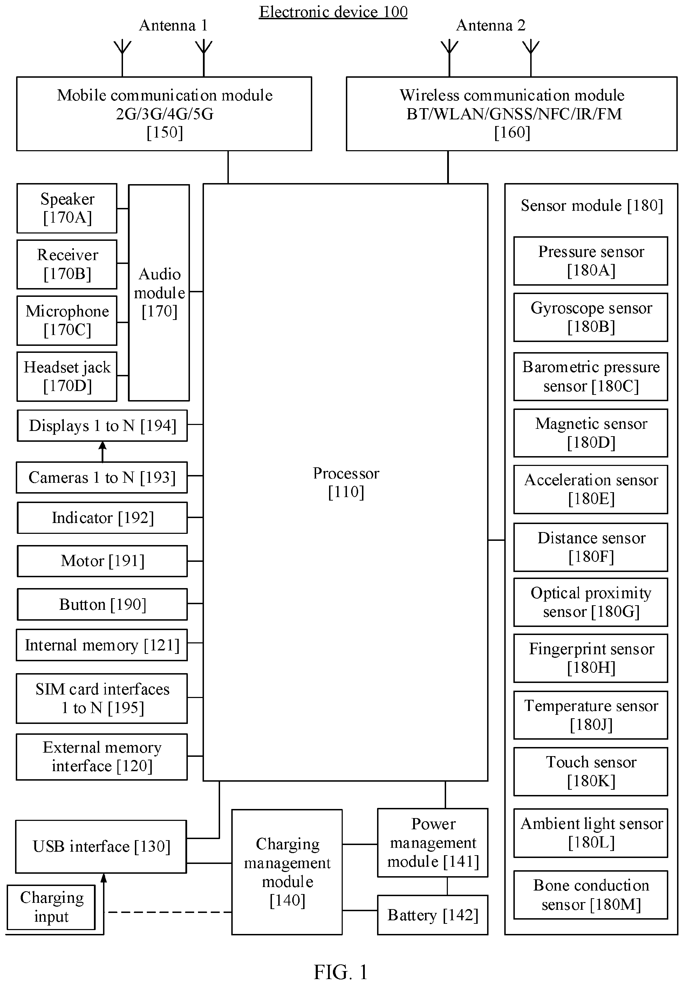

For example, FIG. 1 is a diagram of a structure of an electronic device 100. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or a combination of some components, or splits from some components, or a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral device such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to exchange data between the electronic device 100 and a peripheral device, or may be configured to connect to a headset for playing an audio through the headset. The interface may be further configured to connect to another electronic device such as an AR device.

It may be understood that an interface connection relationship between the modules shown in this embodiment of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. When charging the battery 142, the charging management module 140 may further supply power to the electronic device by using the power management module 141.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110, or may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100, and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite systems, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

For example, in this application, portrait information of a user may be captured by using the camera of the electronic device, or a gesture of a user may be captured by using the camera of the electronic device. The portrait information of the user is transmitted to the processor 110, and the processor determines a height of a display interface. In addition, the camera may transmit gesture information to the processor 110, and the processor 110 recognizes the gesture of the user. Moreover, the camera may obtain a facial feature of the user, and transmit captured facial feature information to the processor 110, and the processor 110 compares the current facial feature of the user with one or more previously stored facial features of the user. When a matching degree between the currently obtained facial feature of the user and the facial feature that is of the user A and that is previously stored in the electronic device is greater than a preset value, content corresponding to the user A is displayed.

The digital signal processor is configured to process a digital signal, and may process another digital signal in addition to the digital image signal. For example, when the electronic device 100 performs frequency selection, the digital signal processor is configured to perform Fourier transform and the like on frequency energy.

The video codec is configured to compress or decompress a digital video. The electronic device 100 may support one or more video codecs. In this way, the electronic device 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, and simulates a biological neural network structure like a transmission mode between neurons in a human brain to perform rapid processing on input information, and can perform continuous self-learning. Applications such as intelligent cognition of the electronic device 100 may be implemented through the NPU, for example, image recognition, facial recognition, speech recognition, and text understanding.

The external memory interface 120 may be configured to connect to an external storage card, for example, a micro SD card, to extend a storage capability of the electronic device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a voice playing function or an image playing function), and the like. The data storage area may store data (for example, audio data or an address book) and the like created when the electronic device 100 is used. In addition, the internal memory 121 may include a high-speed random access memory, or may include a non-volatile memory, for example, at least one magnetic disk storage device, a flash memory device, or a universal flash storage (universal flash storage, UFS).

The electronic device 100 may implement an audio function, for example, music playing or recording, through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to code and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or voice information is received through the electronic device 100, the receiver 170B may be put close to a human ear to listen to a voice.

The microphone 170C, also referred to as a "mike" or a "mic", is configured to convert a sound signal into an electrical signal. When making a call or sending voice information, the user may make a sound by using a human mouth close to the microphone 170C, and input a sound signal to the microphone 170C. At least one microphone 170C may be disposed in the electronic device 100. In some other embodiments, two microphones 170C may be disposed in the electronic device 100, to capture a sound signal and implement a noise reduction function. In some other embodiments, three, four, or more microphones 170C may alternatively be disposed in the electronic device 100, to capture a sound signal, implement noise reduction, and recognize a sound source, thereby implementing a directional recording function and the like.

The headset jack 170D is configured to connect to a wired headset. The headset jack 170D may be a USB interface 130, or may be a 3.5 mm open mobile electronic device platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating an SMS message is executed.

The gyroscope sensor 180B may be configured to determine a moving posture of the electronic device 100. In some embodiments, an angular velocity of the electronic device 100 around three axes (namely, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip leather case by using the magnetic sensor 180D. In some embodiments, when the electronic device 100 is a flip phone, the electronic device 100 may detect opening and closing of a flip cover by using the magnetic sensor 180D. Further, a feature such as automatic unlocking of the flip cover is specified based on a detected opening or closing state of the leather case or a detected opening or closing state of the flip cover.

The acceleration sensor 180E may detect accelerations in various directions (usually on three axes) of the electronic device 100. When the electronic device 100 is still, a magnitude and a direction of gravity may be detected. The acceleration sensor 180E may be further configured to recognize a posture of the electronic device, and is used in an application such as switching between a landscape mode and a portrait mode or a pedometer.

The distance sensor 180F is configured to measure a distance. The electronic device 100 may measure a distance through infrared light or a laser. In some embodiments, in a photographing scenario, the electronic device 100 may measure a distance by using the distance sensor 180F to implement quick focusing.

For example, in this application, a distance between any part of the user and a screen center of the electronic device may be measured by using the distance sensor 180F, or a distance between any part of the user and any point on a screen of the electronic device may be measured by using the distance sensor 180F.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby body by using the photodiode. When sufficient reflected light is detected, it may be determined that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a leather case mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

For example, in this application, as long as the user appears around the electronic device, the optical proximity sensor 180G may detect a light change, and the optical proximity sensor may transfer information of the light change to the processor 110. The processor may control to enable a capturing function of the camera, and start to trigger the camera to detect and recognize the user; or the processor controls to enable a measurement function of the sensor, and starts to trigger the sensor to measure a distance between the user and the electronic device.

The fingerprint sensor 180H is configured to capture a fingerprint. The electronic device 100 may use a feature of the captured fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent abnormal shutdown of the electronic device 100 due to a low temperature. In some still other embodiments, when the temperature is lower than still another threshold, the electronic device 100 boosts an output voltage of the battery 142 to prevent abnormal shutdown due to a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, or the like. The button 190 may be a mechanical button, or may be a touch button. The electronic device 100 may receive a button input, and generate a key signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. The touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 is compatible with different types of SIM cards. The SIM card interface 195 is also compatible with an external storage card. The electronic device 100 interacts with a network through the SIM card, to implement functions such as conversation and data communication. In some embodiments, the electronic device 100 uses an eSIM, namely, an embedded SIM card. The eSIM card may be embedded into the electronic device 100, and cannot be separated from the electronic device 100.

A software system of the electronic device 100 may use a layered architecture, an event-driven architecture, a microkernel architecture, a microservice architecture, or a cloud architecture. In embodiments of this application, an Android system of the layered architecture is used as an example to describe a software structure of the electronic device 100.

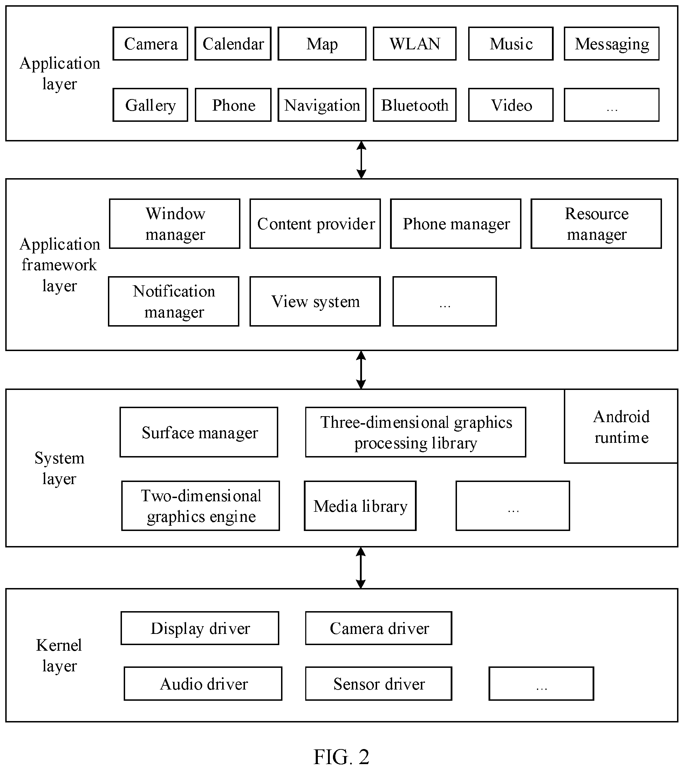

FIG. 2 is a block diagram of the software structure of the electronic device 100 according to an embodiment of this application. In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom. The application layer may include a series of application packages.

As shown in FIG. 2, the application packages may include applications such as Camera, Gallery, Calendar, Phone, Map, Navigation, WLAN, Bluetooth, Music, Video, and Messaging.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application.

The view system includes visual controls such as a control for displaying a text and a control for displaying an image. The view system may be configured to construct an application. A display interface may include one or more views.

The phone manager is configured to provide a communication function of the electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without requiring a user interaction. For example, the notification manager is configured to: notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a core library and a virtual machine. The Android runtime is responsible for scheduling and management of the Android system.

The core library includes two parts: a function that needs to be called in Java language and a core library of Android.

The application layer and the application framework layer run on the virtual machine. The virtual machine executes Java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (media library), a three-dimensional graphics processing library (for example, OpenGL ES), and a 2D graphics engine (for example, SGL).

The surface manager is configured to: manage a display subsystem, and provide fusion of 2D and 3D image layers for a plurality of applications.

The media library supports playing and recording in a plurality of commonly used audio and video formats, and static image files. The media library may support a plurality of audio and video encoding formats, for example, MPEG4, H.264, MP3, AAC, AMR, JPG, and PNG.

The three-dimensional graphics processing library is configured to implement three-dimensional graphics drawing, image rendering, composition, image layer processing, and the like.

The 2D graphics engine is a drawing engine for 2D drawing.

The kernel layer is a layer between hardware and software. The kernel layer includes at least a display driver, a camera driver, an audio driver, and a sensor driver.

For ease of understanding, in the following embodiments of this application, an electronic device having the structures shown in FIG. 1 and FIG. 2 is used as an example to describe in detail, with reference to the accompanying drawings and an application scenario, a display method of the electronic device provided in embodiments of this application.

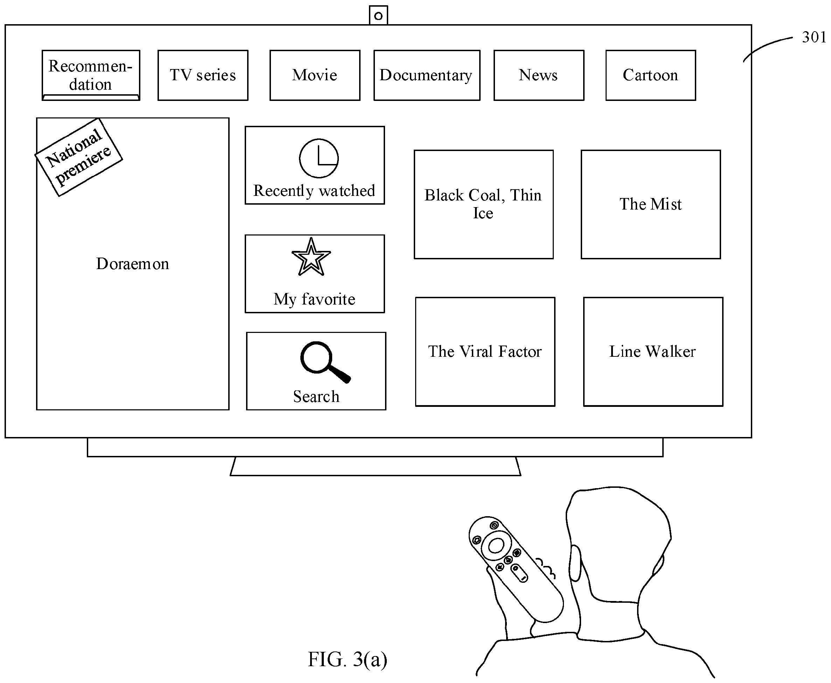

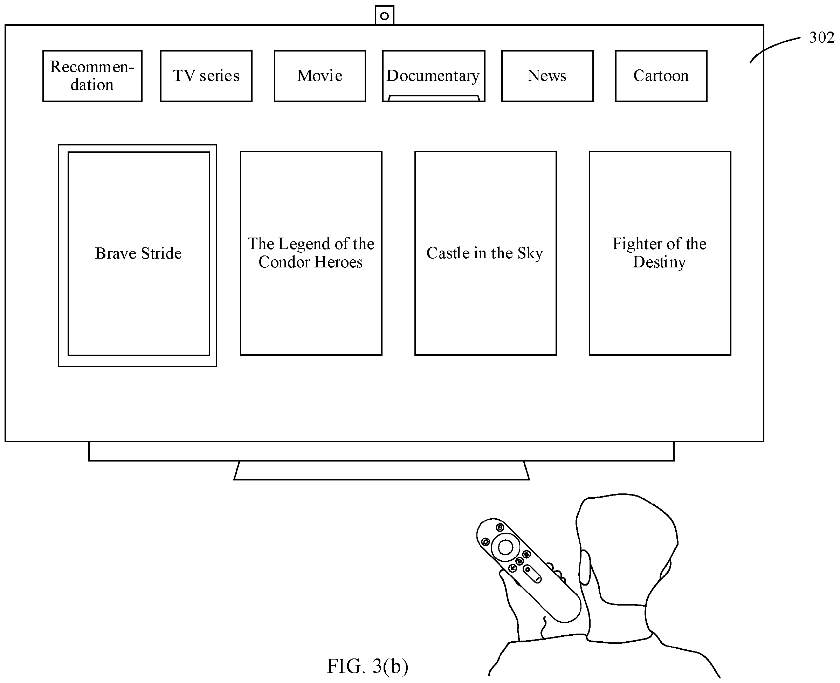

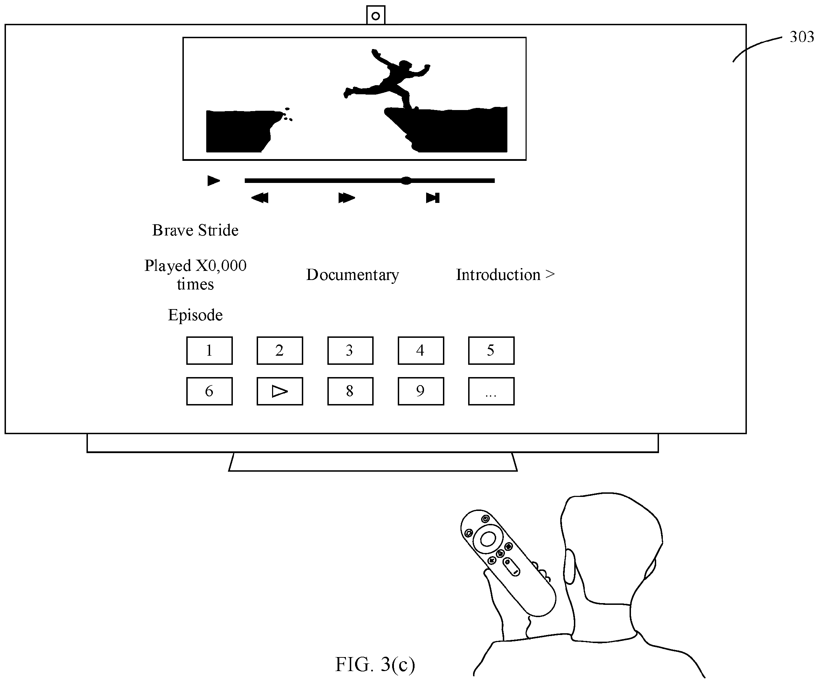

The following uses opening a video on a large-screen device as an example to describe how to start or open an application or a program in the conventional technology. FIG. 3(a), FIG. 3(b), and FIG. 3(c) are a diagram of a graphical user interface for opening a video for playing according to an embodiment of this application. FIG. 3(a) shows a main interface of the large-screen device. The interface 301 displays a plurality of menu bars that are Recommendation, TV series, Movie, Documentary, News, Cartoon, and the like. A user moves, by using up, down, left, and right buttons on a remote control, a location of a cursor corresponding to the remote control on a display. When the cursor on the remote control moves to a location that the user wants to watch, the user presses an OK button on the remote control to display content that the user wants to watch. For example, when the user wants to watch a documentary, the user may move, by using the up, down, left, and right buttons on the remote control, a location of the cursor corresponding to the remote control on the interface 301. When the location of the cursor is moved to a "Documentary" application icon, the user presses the OK button on the remote control, and the large-screen device enters a main interface 302 of the documentary, as shown in FIG. 3(b). The main interface 302 of the documentary includes a plurality of documentaries. When the user wants to watch a documentary "Brave Stride", the user moves, by using the up, down, left, and right buttons on the remote control, a location of the cursor corresponding to the remote control on the interface 302. When the location of the cursor is moved to a "Brave Stride" icon, the user presses the OK button on the remote control, and the large-screen device enters a main interface 303 of the documentary "Brave Stride", as shown in FIG. 3(c). The main interface 303 includes a quantity of times the documentary is played, Introduction, and Episode. The user may further select an episode number in the episodes by using the up, down, left, and right buttons on the remote control to determine a video that needs to be watched finally. It may be learned from the operation of opening the documentary that, for an application or a service that is frequently used on the large-screen device, the remote control needs to be used to perform operations step by step for entering the application, and there are many steps, resulting in a complex path and poor user experience.

In addition, in the foregoing implementation, it is inconvenient for a child or an elderly user to enable a frequently used function by relying on the remote control. A service life of physical buttons on the remote control as a hardware device is limited, and a quantity of tapping times or pressing times the remote control can bear is also limited. If the remote control is damaged or lost, the large-screen device cannot be started normally, and replacing the remote control or purchasing a remote control also increases hardware costs.

In view of this, this application provides a display method of an electronic device. The method includes: when the electronic device is on a first interface, sensing a distance between a user and the electronic device, a motion trajectory of the user, and an included angle between a motion trajectory of the user and a normal line of the electronic device; and when the distance between the user and the electronic device meets a first threshold, the motion direction of the user is a direction toward the electronic device, and the included angle between the motion trajectory of the user and the normal line of the electronic device meets a second threshold, displaying, by the electronic device, at least one of an application frequently used by the user, a program frequently watched by the user, or a time-sensitive event on the first interface; or switching, by the electronic device, from a first interface to a second interface, and displaying at least one of an application frequently used by the user, a program frequently watched by the user, or a time-sensitive event on the second interface. The first interface includes a screen-off interface, an always on display AOD interface, or a screen saver interface. The method provided in this application avoids a current situation that the application or the interface frequently used by the user can be started or opened only when a remote control is used, so that the user can open an interface that the user wants to watch more conveniently and quickly. This improves user experience.

In a possible application scenario, when the user wants to quickly open, on a large-screen device, a task card corresponding to a recently watched program without using the remote control, the display method of the electronic device provided in this application may be used.

In another possible application scenario, when the user wants to quickly dial, on a large-screen device, a task card corresponding to a video call with a person without using the remote control, the display method of the electronic device provided in this application may be used.

In still another possible application scenario, when the user wants to enter, on a large-screen device, a task card corresponding to a learning course in a fixed time period without using the remote control, the display method of the electronic device provided in this application may be used.

The electronic device provided in embodiments of this application may be an electronic device having a large display, for example, a large-screen device, a tablet computer, a PC, an in-vehicle infotainment, a smart screen, or a folded screen device.

It should be noted that the large screen mentioned in this application may also be referred to as a smart screen. That is, the large-screen device may also be referred to as a smart screen device.

The following specifically describes the display method of the electronic device provided in this application by using an example in which the electronic device is a large-screen device.

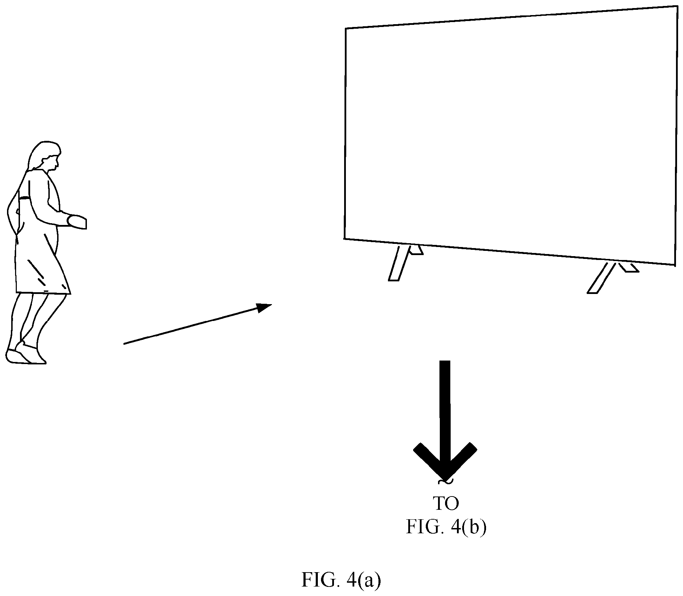

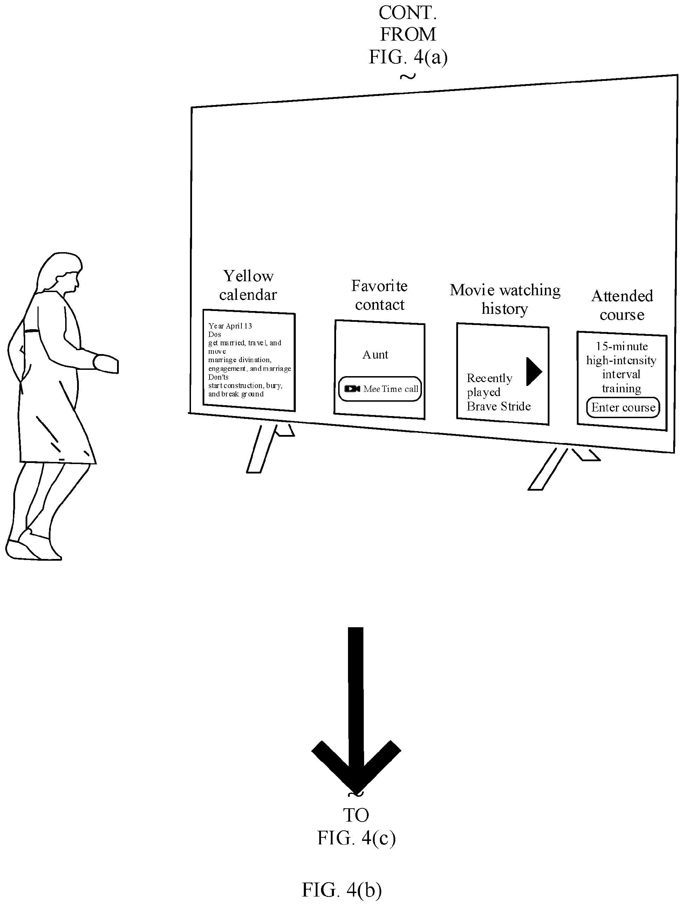

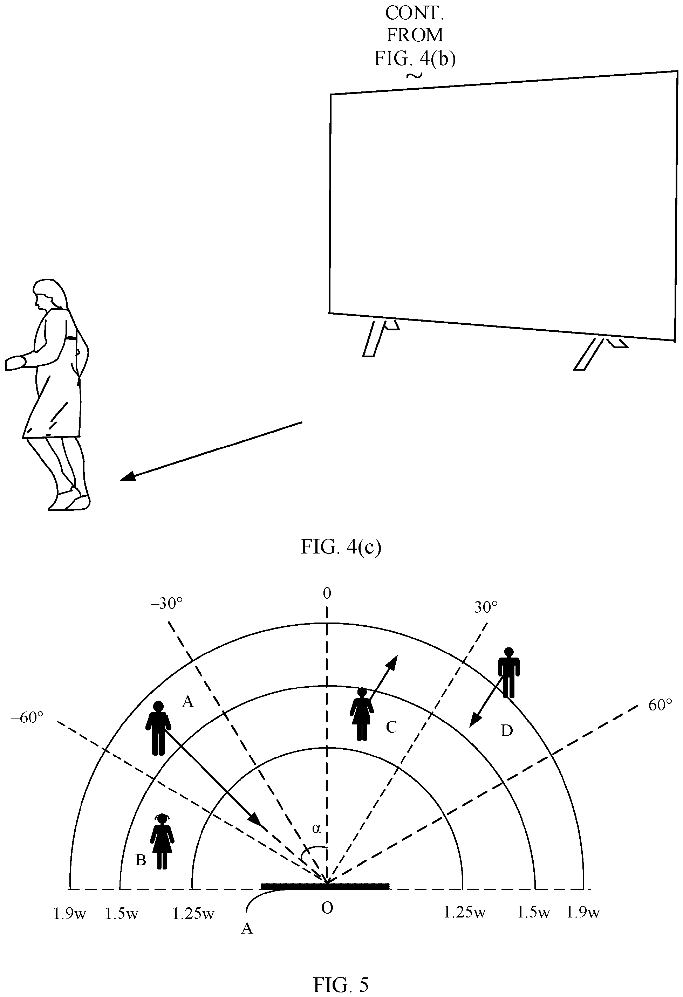

FIG. 4(a), FIG. 4(b), and FIG. 4(c) are a diagram of an example of a display interface of an electronic device according to an embodiment of this application. FIG. 4(a) shows a screen-off interface of the electronic device.

It should be understood that the screen-off interface is an interface displayed by the electronic device when the electronic device is in a power-off state or a screen-off state.

At a location where a user is at a specific distance from a display of the electronic device, when the electronic device recognizes that a distance between the user and the electronic device meets a first threshold, an included angle between a motion trajectory of the user and a normal line of the electronic device meets a second threshold, and a motion direction of the user is toward the electronic device, the electronic device may switch from the interface in FIG. 4(a) to an interface in FIG. 4(b). The interface mainly includes an application recently and frequently used by the user or a task card of a program. For example, as shown in the interface in FIG. 4(b), the frequently used application may be a yellow calendar, a favorite contact, and an attended course, and the program may be a movie watching history.

It should be noted that, that a motion direction of the user is toward the electronic device means that the user's front moves toward the electronic device, and the distance between the user and the electronic device becomes shorter as time elapses.

The following specifically describes how the electronic device senses the distance between the user and the electronic device, the motion direction of the user, and the included angle between the motion trajectory of the user and the normal line of the electronic device, and how the electronic device determines whether the distance between the user and the electronic device meets the first threshold, whether the motion direction of the user is a direction toward the electronic device, and whether the included angle between the motion trajectory of the user and the normal line of the electronic device meets the second threshold.

In a possible implementation, the electronic device may monitor the distance between the user and the electronic device by using the distance sensor 180F shown in FIG. 1.

Optionally, the distance sensor may be kept in a state in which a monitoring function is enabled, and monitor the distance between the user and the electronic device in real time.

Optionally, to reduce power consumption of the electronic device, the monitoring function of the distance sensor may be further enabled in a specific triggering manner.

For example, the electronic device may perform monitoring by using the optical proximity sensor 180G shown in FIG. 1. For example, provided that the user appears around the electronic device, the optical proximity sensor 180G may monitor a light change. The optical proximity sensor 180G may transfer information of the light change to the processor 110, and the processor 110 controls a recognition function of the distance sensor 180F.

In a possible implementation, the distance between the electronic device and the user may be a distance between any part of the user's body and a center point of a large screen of the electronic device.

In another possible implementation, the distance between the electronic device and the user may be a distance between any part of the user's body and any point on the electronic device.

In an implementation, the first threshold between the user and the electronic device may be 0×w to 1.9×w (m). That is, when the first threshold is met, the interface in FIG. 4(b) is fully presented.

In another implementation, the first threshold between the user and the electronic device may be 0×w to 1.9×w (m), and interaction effect is the best when the user is 0×w to 1.25×w (m) away from the front of the electronic device. In other words, when the distance between the user and the electronic device is 1.25×w to 1.5×w (m), the interface in FIG. 4(b) begins to appear gradually. When the distance between the user and the electronic device is 0×w to 1.25×w (m), the interface in FIG. 4(b) is fully presented.

It should be understood that w may represent a diagonal length of a screen of a large-screen device. For example, w may be 0.5 m.

In embodiments of this application, when the electronic device recognizes that the distance between the user and the electronic device is 0×w to 1.9×w (m), it indicates that the distance between the user and the electronic device meets the first threshold.

Certainly, the first threshold may alternatively be another range or threshold. This is not limited in embodiments of this application.

In some embodiments, the electronic device may monitor the included angle between the motion trajectory of the user and the normal line of the electronic device via ultrasound.

In a possible implementation, the ultrasound may be kept in a state in which a monitoring function is enabled. To reduce power consumption of the electronic device, the monitoring function of the ultrasound may be further enabled in a specific triggering manner.

For example, the electronic device performs monitoring by using the optical sensor 180G shown in FIG. 1. For example, provided that a face of the user appears around the electronic device, the optical sensor 180G may monitor a light change. The optical sensor may transfer information of the light change to the processor 110, and the processor controls a recognition function of the ultrasound.

In a possible implementation, when the user moves linearly toward the electronic device, the included angle between the motion trajectory of the user and the normal line of the electronic device may be an included angle formed by a line connecting the user and a screen center of the electronic device and the screen center of the electronic device.

In another possible implementation, when the user moves non-linearly toward the electronic device, the electronic device may detect a location of the user in real time by using a camera, and the included angle between the motion trajectory of the user and the normal line of the electronic device may be an included angle formed by a line connecting the real-time location of the user and a screen center of the electronic device and a normal line that is of the electronic device and that passes through the screen center of the electronic device.

For example, the second threshold for the included angle between the motion trajectory of the user and the normal line of the electronic device may be -60° to 60°.

In a possible implementation, if a normal line of a screen of the electronic device is taken as 0°, a clockwise direction along the normal line of the screen of the electronic device is positive, and a counterclockwise direction along the normal line of the screen of the electronic device is negative.

In embodiments of this application, when the electronic device recognizes that the included angle between the motion trajectory of the user and the normal line of the electronic device is - 60° to 60°, that is, an absolute value of the included angle between the motion trajectory of the user and the normal line of the electronic device is less than 60°, it indicates that the included angle between the motion trajectory of the user and the normal line of the electronic device meets the second threshold.

Certainly, the second threshold may alternatively be another range or threshold. This is not limited in embodiments of this application.

In some embodiments, the electronic device may recognize the motion direction of the user by installing a multi-antenna UWB, a millimeter wave, a Wi-Fi device, or the like.

It should be understood that, when the electronic device recognizes that a distance between the user and a center point of the electronic device becomes shorter as time elapses, it indicates that the trajectory of the user is in a direction toward the electronic device. On the contrary, when the electronic device recognizes that the distance between the user and the center point of the electronic device becomes longer as time elapses, it indicates that the trajectory of the user is away from the direction of the electronic device.

It should be noted that in this application, devices for obtaining the distance between the user and the electronic device, obtaining the included angle between the motion trajectory of the user and the normal line of the electronic device, and recognizing the motion direction of the user by the electronic device are not limited to the distance sensor, the ultrasound, and the like described above, or may be implemented by a single-antenna ultra wide band (Ultra Wide Band, UWB), a multi-antenna UWB, a millimeter wave, Bluetooth, Wi-Fi, and the like. In addition, the devices for recognizing the motion direction of the user by the electronic device, determining the distance between the user and the electronic device, and determining the included angle between the motion trajectory of the user and the normal line of the electronic device may be a same device, for example, a multi-antenna UWB, or may be different devices, for example, a multi-antenna UWB for recognizing the motion direction of the user, a single-antenna UWB for obtaining the distance between the user and the electronic device, and a millimeter wave for determining the included angle between the motion trajectory of the user and the normal line of the electronic device. This is not limited in this application.

The following uses FIG. 5 as an example to describe whether the user meets a condition for triggering the electronic device to switch from the interface in FIG. 4(a) to the interface in FIG. 4(b). FIG. 5 is a diagram in which the user triggers the electronic device according to an embodiment of this application. As shown in FIG. 5, S represents a top view of the electronic device, and O represents the center point of the electronic device. It may be learned from FIG. 5 that, if a distance between a user A and the electronic device is 1.5w to 1.9w, it indicates that the distance between the user A and the electronic device meets the first threshold; if an included angle between a line connecting the user A and the center point O of the electronic device and a normal line that is of the electronic device and that passes through the center point O of the electronic device is -60° to 0°, it indicates that the included angle between a motion trajectory of the user A and the normal line of the electronic device meets the second threshold; and the trajectory of the user A is in a direction toward the electronic device. In this case, the user A may trigger the electronic device to switch from the interface in FIG. 4(a) to the interface in FIG. 4(b).

If a distance between a user B and the electronic device is 1.25w to 1.5w and meets the first threshold, but an absolute value of an included angle between a connection line between the user A and the center point O of the electronic device and the normal line that is of the electronic device and that passes by the center point O of the electronic device is greater than 60°, the user B cannot trigger the electronic device to switch from the interface in FIG. 4(a) to the interface in FIG. 4(b).

If a distance between a user C and the electronic device is 1.25w to 1.5w and meets the first threshold, but a trajectory of the user C is in a direction backward the electronic device, the user C cannot trigger the electronic device to switch from the interface in FIG. 4(a) to the interface in FIG. 4(b).

If a distance between a user D and the electronic device is greater than 1.9w and does not meet a first preset condition, the user D cannot trigger the electronic device to switch from the interface in FIG. 4(a) to the interface in FIG. 4(b) either.

For example, content on the display interface may be obtained in the following manner:
In a possible implementation, the electronic device may collect an application that is most frequently used by the user in the last week. The application is not limited to Huawei Video, WeChat, TikTok, and the like, or may be a service or a shortcut function of an application installed by the user, for example, a video call of WeChat, a playback of a video, or a recommendation interface of TikTok. For example, the electronic device collects contacts frequently used by the user in WeChat within one week. For example, the frequently used contact is the aunt. For another example, the electronic device collects an episode recently watched by the user in a video playing application. For example, a documentary recently watched in Huawei Video is "Brave Stride".

It should be noted that the user may be any user using the electronic device, and the user may be a same user or may be different users. In other words, there may be one or more users.

In another possible implementation, the user may manually preset corresponding display content on the electronic device, and the user may set the display content based on a specific situation. This is not limited in embodiments of this application. For example, the user may set, based on a daily use frequency, an application or an interface that is most frequently used as the display content. For another example, the user may further set corresponding display content based on a corresponding date in each week. For example, the user may set a historical movie watching interface to be displayed on Monday, and a course attending interface to be displayed on Tuesday. The user may further set a child mode on the electronic device. When detecting that the user is a child, the electronic device displays content corresponding to the child mode on the display interface, for example, children's English or a carton. Certainly, the user may further set an elderly mode on the electronic device. When detecting that the user is an elderly person, the electronic device displays content corresponding to the elderly mode on the display interface, for example, a square dance or a regimen program.

In still another possible implementation, the application on the display interface of the electronic device may alternatively be intelligently recommended, and includes but is not limited to: a time-sensitive-related service, for example, a schedule to-do, a reserved episode, a live broadcast, a sports event, or a course; a service that is intelligently recommended and that is frequently used, for example, a service used at a fixed time, such as an English course at 2:00 p.m. every day; and an exception reminder, for example, an exception of a smart home device, such as a low battery level of the home device.

In some embodiments, display content on the interface in FIG. 4(b) may be displayed by using a dock. The display content may alternatively be displayed in any one of a "toast" (toast), a task card, a floating window, a floating ball, and an icon of a message prompt component. Certainly, the display content on the interface may alternatively be displayed in another display form. A display manner of an application or a specific interface is not limited in embodiments of this application.

It should be understood that the dock may be understood as a display interface including a plurality of task cards. The "toast" may be understood as a toast message reminder box. A format such as a shape and a color of the toast or the message prompt box is not limited in this application, and embodiments of this application are merely examples for description.

In some embodiments, a display location that is on the electronic device and that is of the display content on the interface in FIG. 4(b) is determined based on a relative location between the user and the electronic device.

For example, the display location may be understood as a distance from the top or the bottom of the screen. That is, when a screen of the electronic device includes an X axis and a Y axis, the display location may be understood as coordinates of the Y axis.

For another example, the display location may also be understood as coordinates of an X axis. When the user is at a location to the right of the screen of the electronic device, the display location may be a location to the right of the screen of the electronic device. When the user is at a location to the left of the screen of the electronic device, the display location may be a location to the left of the screen of the electronic device.

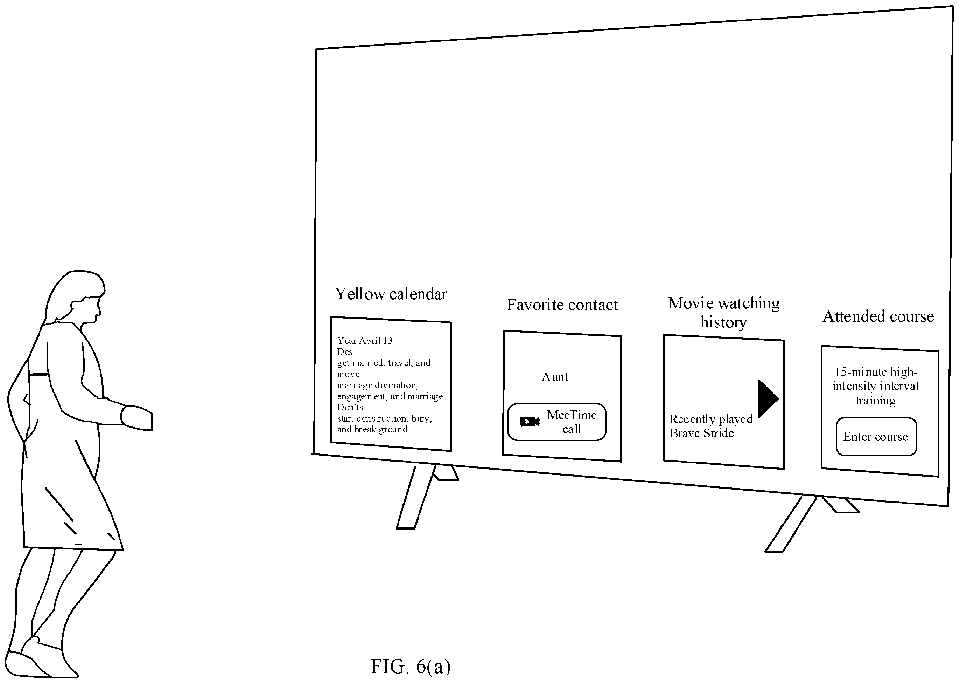

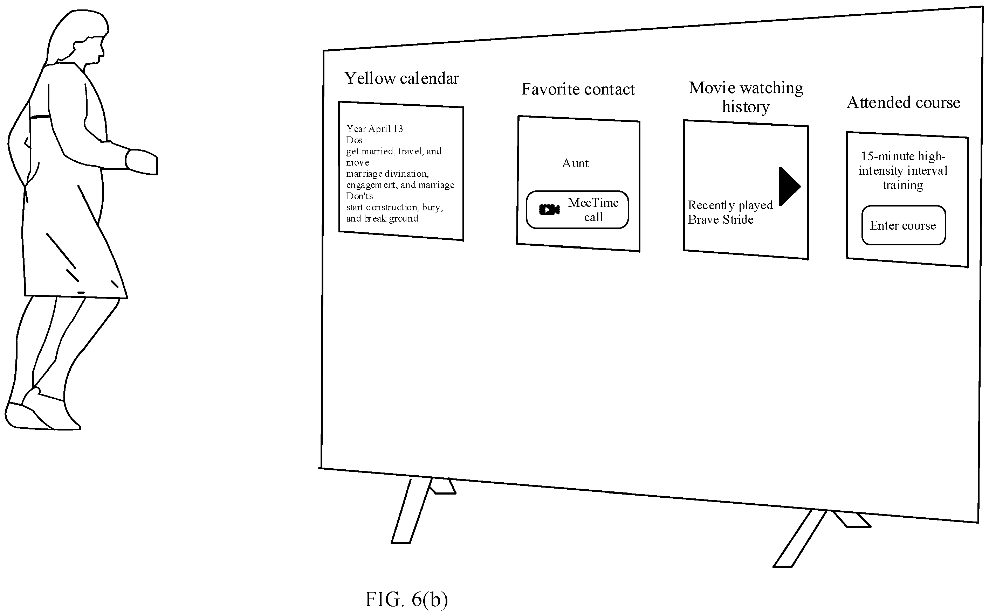

For example, when the display content on the interface in FIG. 4(b) is displayed by using a dock, the electronic device may display the dock based on a relative height between the user and the electronic device. FIG. 6(a) and FIG. 6(b) are a diagram of a display height of a dock relative to a user height according to an embodiment of this application. As shown in FIG. 6(a), when detecting that the user is lower than the display of the electronic device, the electronic device displays the dock at the bottom of the display. As shown in FIG. 6(b), when detecting that the user is higher than the display of the electronic device, the electronic device displays the dock at the top of the display. Certainly, the electronic device may alternatively display the dock at any height. This is not limited in embodiments of this application.

For example, the electronic device may obtain portrait information of the user by using a camera, and the camera transmits the portrait information of the user to the processor 110. When the processor recognizes, based on the portrait information, that the head of the user is located below the image, it indicates that the user is lower than the display of the electronic device. When the processor recognizes that the head of the user is located above the image, it indicates that the user is higher than the display of the electronic device.

In a possible implementation, when the display content is displayed in a form of a "toast", a task card, a floating window, an icon, or the like, a size of the "toast", the task card, the floating window, or the icon may be adjusted based on a specific situation. For example, when the display content is displayed in a task card, a central task card may be zoomed in, and other task cards may be zoomed out. Alternatively, the user may set which application cards are zoomed in or zoomed out.

It should be understood that the central task card may be understood as follows: When N task cards are displayed on the display, where N is an odd number and N>1, the central task card is an [(N+1)/2]^{th} card, or the central task card is an [(N-1)/2]^{th} card; or when N is an even number, an (N/2)^{th} task card is the central task card.

For example, if four task cards are displayed in FIG. 4(b), the central task card is a second task card, and the second task card may be properly zoomed in for display. Alternatively, when there are four task cards on the display, any task card may be zoomed in or zoomed out according to a user requirement. For example, to facilitate the user to view a yellow calendar, a task card corresponding to the yellow calendar may be zoomed in for display, and a card corresponding to a favorite contact may be zoomed out. In other words, a size of each task card may be adjusted based on an actual situation. This is not limited in embodiments of this application.

After the user finishes browsing the content displayed on the electronic device and the user turns away, the electronic device switches from the interface in FIG. 4(b) to the screen-off interface in FIG. 4(c).

In a possible implementation, after the electronic device detects no facial feature of the user, the electronic device switches from the interface in FIG. 4(b) to the screen-off interface in FIG. 4(c). This can reduce power consumption of the electronic device and save energy.

In another possible implementation, when the electronic device determines that the distance between the user and the electronic device does not meet the first threshold, or the motion direction of the user is backward the electronic device, or the included angle between a direction of the motion trajectory of the user and the normal line of the electronic device does not meet the second threshold, the electronic device switches from the interface in FIG. 4(b) to the screen-off interface in FIG. 4(c). Similarly, this can reduce power consumption of the electronic device and save energy.

It should be understood that, that the motion direction of the user is backward the electronic device indicates that the user's front faces away from the electronic device, and the distance between the user and the electronic device becomes farther and farther as time elapses.

It should be noted that, for a specific process in which the electronic device determines to switch from the interface in FIG. 4(b) to the interface in FIG. 4(c), refer to the specific descriptions in FIG. 5. Details are not described herein again.

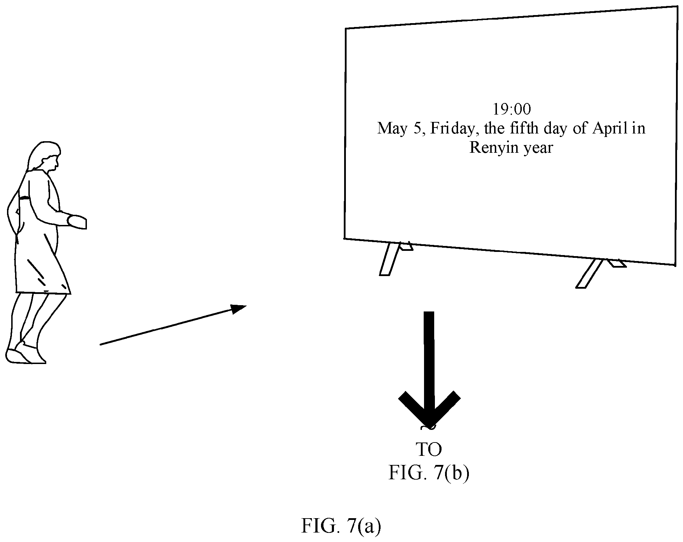

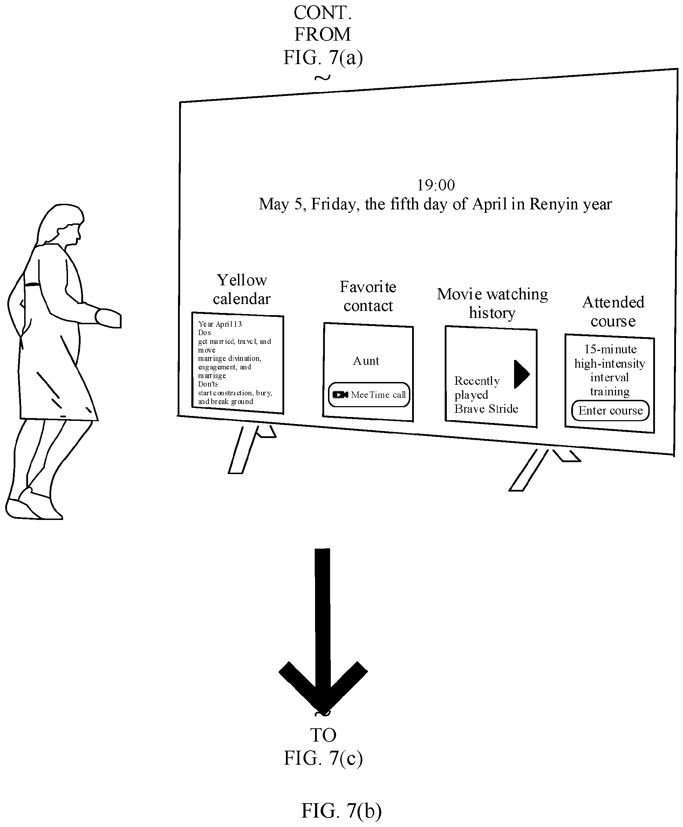

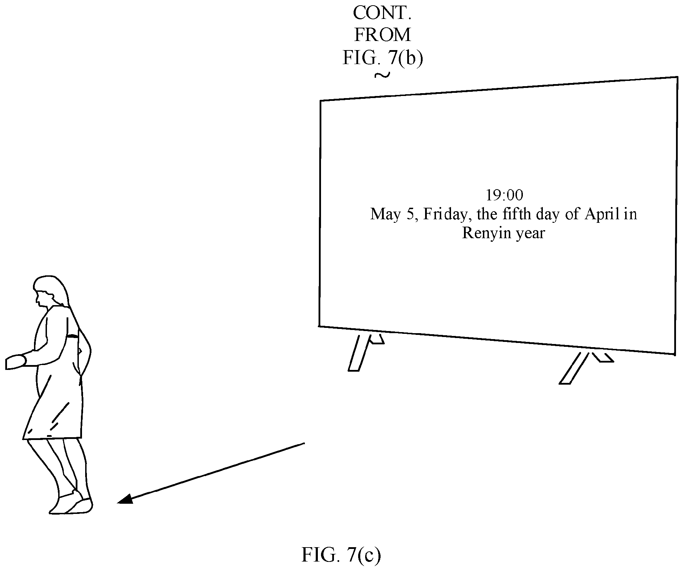

FIG. 4(a), FIG. 4(b), and FIG. 4(c) mainly describe in detail the electronic device from the screen-off interface to the display interface. The display method of the electronic device provided in this application is also applicable to switching between different display interfaces in a screen-off display process of the electronic device from an always on display (Always on Display, AOD) interface. FIG. 7(a), FIG. 7(b), and FIG. 7(c) are a diagram of another example of a display interface of an electronic device according to an embodiment of this application. FIG. 7(a) shows an always on display AOD interface of the electronic device, and the always on display AOD interface displays "19:00 May 5, Friday, the fifth day of April in Renyin year".

It should be understood that the always on display AOD indicates a case in which an entire screen of the electronic device is not lit up, the screen is controlled to be partially lit up, and some important information is always displayed on the mobile phone. For example, content such as time, an incoming call, a message, battery information, and a push message is displayed, so that the user can intuitively view required information. This reduces steps of operating the mobile phone by the user and brings convenience. For example, FIG. 7(a) shows the time, specifically, "19:00 May 5, Friday, the fifth day of April in Renyin year".

At a location where a user is at a specific distance from a display of the electronic device, when the electronic device determines that a distance between the user and the electronic device meets a first threshold, an included angle between a motion trajectory of the user and a normal line of the electronic device meets a second threshold, and a motion direction of the user is a direction toward the electronic device, the electronic device may switch from an interface in FIG. 7(a) to an interface in FIG. 7(b). The interface in FIG. 7(b) mainly includes an application recently and frequently used by the user or a task card of a program. For example, as shown in the interface in FIG. 7(b), the application frequently used by the user may be a yellow calendar, a favorite contact, and an attended course, and the program may be a movie watching history.

In a possible implementation, when the electronic device switches from the interface in FIG. 7(a) to the interface in FIG. 7(b), display time on the display is blurred or dimmed, thereby making it easier for the user to see content on the card clearly.

It should be noted that, for a specific process in which the electronic device senses the distance between the user and the electronic device, the motion direction of the user, and the included angle between the motion trajectory of the user and the normal line of the electronic device, and how the electronic device determines whether the distance between the user and the electronic device meets the first threshold, whether the motion direction of the user is the direction toward the electronic device, and whether the included angle between the motion trajectory of the user and the normal line of the electronic device meets the second threshold, refer to the descriptions in FIG. 4(a), FIG. 4(b), FIG. 4(c), and FIG. 5. Details are not described herein again.

After the user finishes browsing the content displayed on the electronic device and the user turns away, the electronic device switches from the interface in FIG. 7(b) to a screen-off interface in FIG. 7(c). For the specific process, refer to the description in FIG. 4(c). Details are not described herein again.

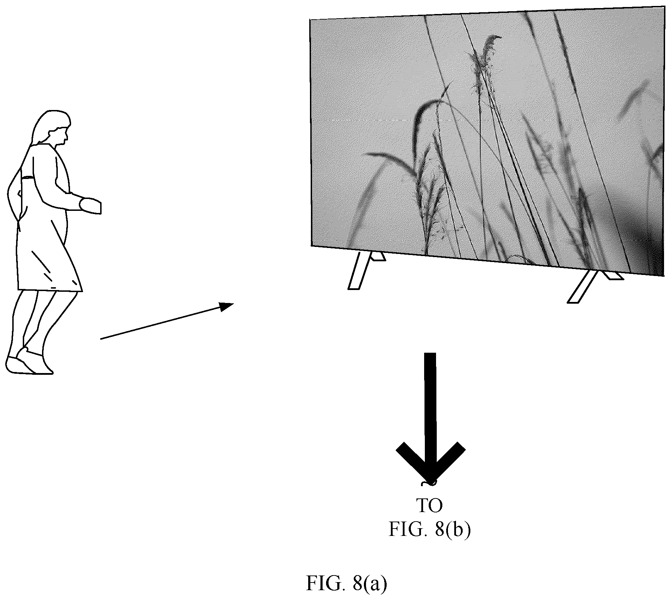

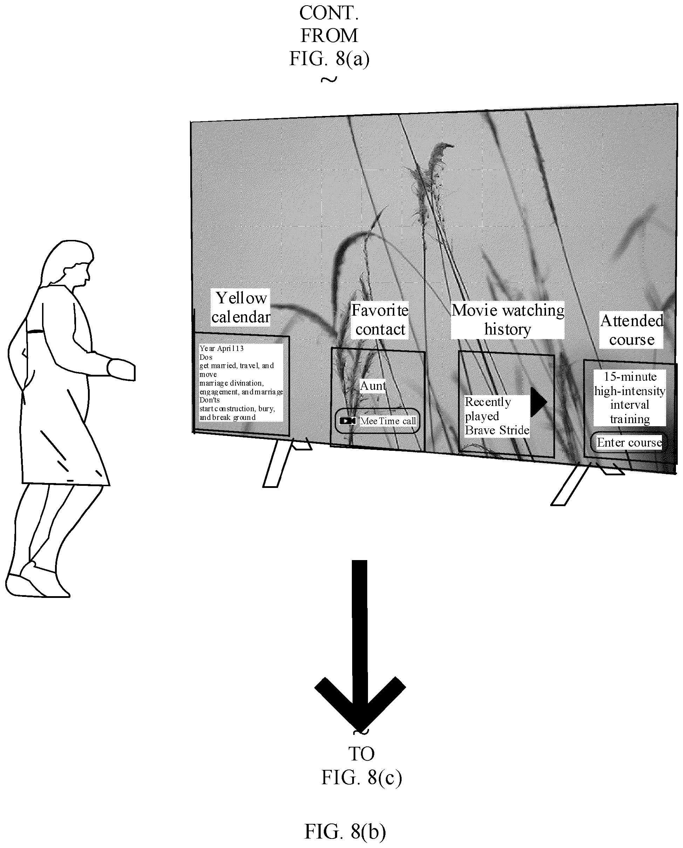

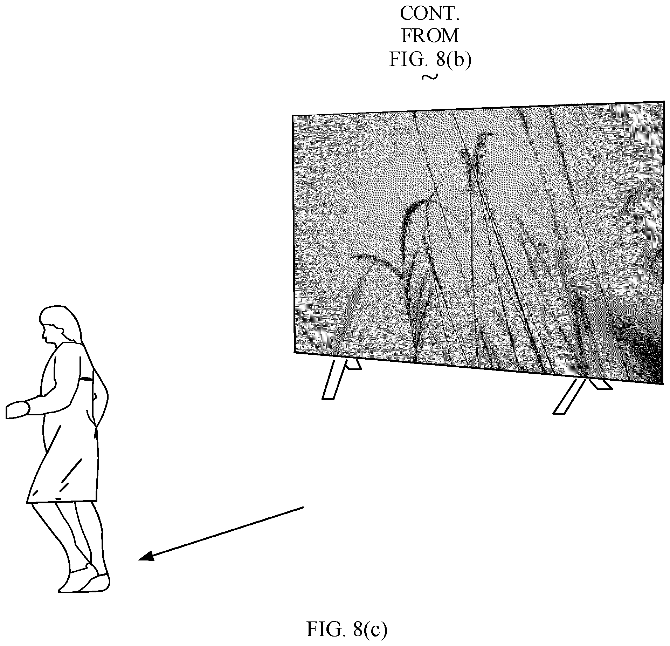

The display method of the electronic device provided in this application is also applicable to a case in which the electronic device switches from a screen saver interface to a display interface. FIG. 8(a), FIG. 8(b), and FIG. 8(c) are a diagram of still another example of a display interface of an electronic device according to an embodiment of this application. FIG. 8(a) shows a screen saver interface of the electronic device.

At a location where a user is at a specific distance from a display of the electronic device, when the electronic device determines that a distance between the user and the electronic device meets a first threshold, an included angle between a motion trajectory of the user and a normal line of the electronic device meets a second threshold, and a motion direction of the user is a direction toward the electronic device, the electronic device may switch from an interface in FIG. 8(a) to an interface in FIG. 8(b). The interface mainly includes an application recently and frequently used by the user or a task card of a program. For example, as shown in the interface in FIG. 8(b), the frequently used application may be a yellow calendar, a favorite contact, and an attended course, and the program may be a movie watching history.

In a possible implementation, when the electronic device switches from the interface in FIG. 8(a) to the interface in FIG. 8(b), a screen saver on the display is blurred or dimmed, thereby making it easier for the user to see content on the card clearly.

After the user finishes browsing the content displayed on the electronic device and the user turns away, the electronic device switches from the interface in FIG. 8(b) to a screen-off interface in FIG. 8(c).

It should be noted that, for a specific process in which the electronic device senses the distance between the user and the electronic device, the motion direction of the user, and the included angle between the motion trajectory of the user and the normal line of the electronic device, how the electronic device determines whether the distance between the user and the electronic device meets the first threshold, whether the motion direction of the user is the direction toward the electronic device, and whether the included angle between the motion trajectory of the user and the normal line of the electronic device meets the second threshold, and how the interface in FIG. 8(b) is switched to the screen-off interface in FIG. 8(c), refer to the descriptions in FIG. 4(a), FIG. 4(b), FIG. 4(c), and FIG. 5. Details are not described herein again.

FIG. 4(a), FIG. 4(b), and FIG. 4(c) to FIG. 8(a), FIG. 8(b), and FIG. 8(c) above describe how to quickly display the recently and frequently used application on the screen-off interface, the always on display AOD interface, or the screen saver interface. According to the foregoing technical solutions, when the electronic device is on the screen-off interface, the always on display AOD interface, or the screen saver interface, the electronic device may sense the distance between the user and the electronic device, the motion trajectory of the user, and the included angle between the motion direction of the user and the normal line of the electronic device. When the distance between the user and the electronic device meets the first threshold, the motion trajectory of the user is the direction toward the electronic device, and the included angle between the motion direction of the user and the normal line of the electronic device meets the second threshold, the electronic device displays an application or a specific interface frequently used by the user on the screen-off interface, the always on display AOD interface, or the screen saver interface. According to the method, the application or the interface frequently used by the user is quickly displayed in a manner of combining the user and the user trajectory, so that an operation of starting an application can be simplified, and user experience is further improved.

For a problem that different users have different requirements for display content, when the electronic device determines that the distance between the user and the electronic device meets the first threshold, the direction of the motion trajectory of the user and the normal line of the electronic device meets the second threshold, and the motion direction of the user is the direction toward the electronic device, the electronic device may further obtain user information by using a camera, and determine, based on the user information, an application or an interface of a specific program recently and frequently used by a current user. Finally, the electronic device directly displays the application recently and frequently used by the user or a specific interface in the application. According to the method, specific content may be displayed for a specific user, so that the user can more conveniently and quickly start or open an application or an interface that is most frequently used. This further improves user experience.

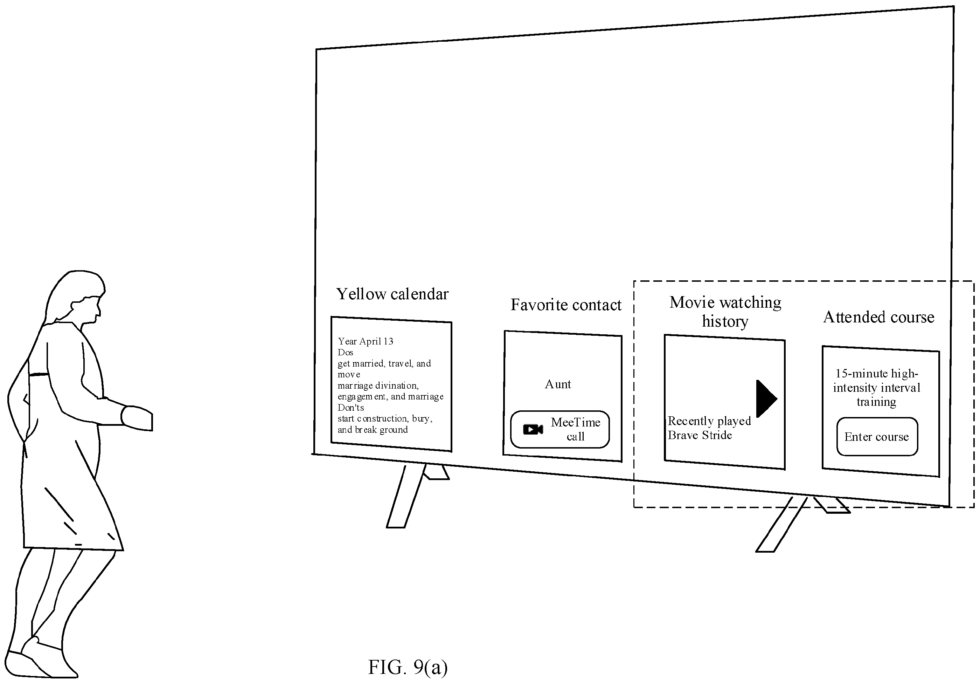

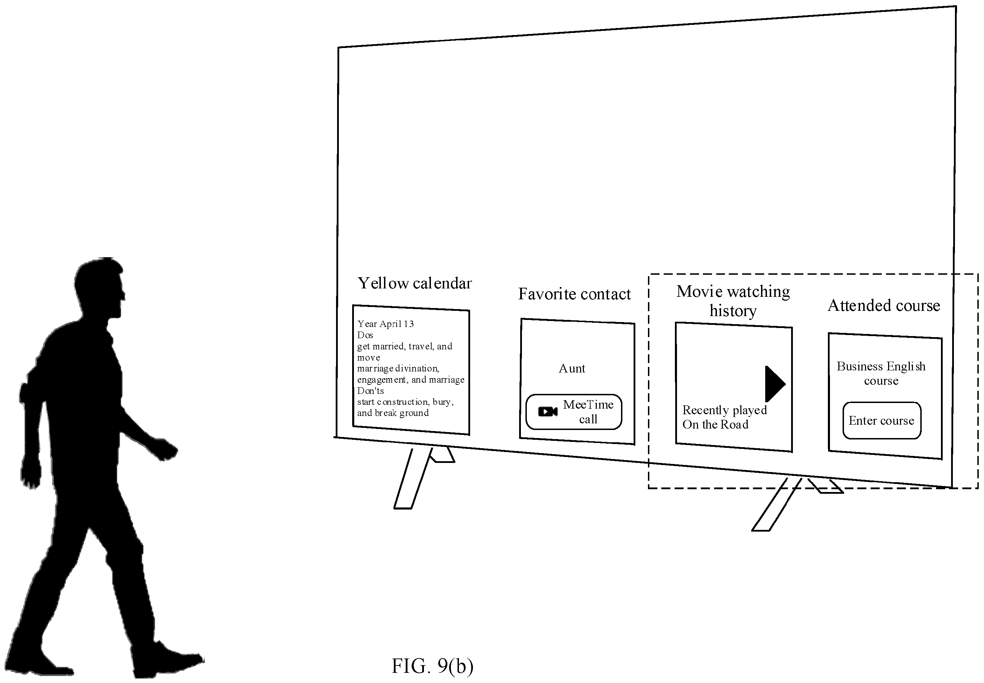

For example, when recognizing a user A, the electronic device displays content corresponding to the user A on the electronic device. FIG. 9(a) and FIG. 9(b) are a diagram of display interfaces for different users according to an embodiment of this application. On an interface in FIG. 9(a), for example, content corresponding to the user A may be a yellow calendar, a favorite contact, a movie watching history, and an attended course that are displayed.

In some embodiments, the electronic device may obtain user information in one or more of the following manners:
For example, the electronic device may obtain the user information by capturing a facial feature of the user; or the electronic device may obtain the user information by obtaining fingerprint information of the device; or the electronic device may obtain the user information by obtaining a wearable device carried by the user.

For another example, the electronic device may obtain the user information by capturing a walking posture of the user or a body shape of the user; or the electronic device may obtain the user information via a voice of the user.

In embodiments of this application, the wearable device may be a wearable wrist device, smart glasses, an augmented reality (augmented reality, AR)/virtual reality (virtual reality, VR) device, or the like. The wearable device may also be a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable smart devices include full-featured and large-size devices that can implement complete or partial functions without depending on smartphones, for example, smart watches or smart glasses, and devices that focus on only one type of application function and need to be used together with other devices such as smartphones, for example, various smart bands or smart jewelry used for monitoring physical signs.

Therefore, a manner in which the electronic device obtains the user information is not limited in embodiments of this application. It should be noted that, in embodiments of this application, the user information is obtained by capturing the facial feature of the user.

In some embodiments, in a process in which the electronic device switches from a screen-off interface to a display interface, a camera of the electronic device needs to capture the facial feature of the user. Optionally, in a process in which the electronic device is triggered to switch from a screen-off interface to a display interface, image information that can be obtained by a camera is captured in real time. Alternatively, the electronic device keeps enabling a capturing function of the camera, to capture, in real time, image information that can be obtained by the camera.

For example, in a process of capturing the facial feature of the user, a frame rate at which the electronic device captures the facial feature may be a fixed frame rate. For example, if the camera captures the facial feature of the user, the electronic device may capture the facial feature of the user 10 times per second. Alternatively, to reduce power consumption of the electronic device, the electronic device may adopt frame rates at different frame rate levels when using the camera to capture the facial feature. For example, when no user appears in a capturing range of the camera, the camera performs capturing at a first frame rate, where the first frame rate may be 10 frames per second. When detecting that a user appears in the capturing range of the camera, the camera performs capturing at a second frame rate, where the second frame rate may be 60 frames per second. Capturing is performed at frame rates of different levels, so that real-time performance and accuracy of capturing the facial feature can be improved, and power consumption of the electronic device can also be reduced. It should be understood that the frame rates of the different levels are not limited in this application.

For another example, when it is detected, by using the sensor module 180 of the electronic device 100, that an environment around the electronic device changes, enabling of the capturing function of the camera is triggered. For example, when it is detected, by using the optical sensor 180G of the electronic device shown in FIG. 1, that light around the electronic device changes, enabling of the capturing function of the camera is triggered. When the user or the face of the user approaches the electronic device without touching the electronic device, brightness of light around the electronic device may change. The optical sensor 180G of the electronic device may detect the change of light brightness, to trigger enabling of the capturing function of the camera, obtain an image, and determine display content of the electronic device based on the captured user image, thereby displaying an application or a specific interface frequently used by the user on the interface in FIG. 9(a).

It should be understood that sequences of switching from the screen-off interface to the display interface and displaying the application frequently used by the user on the display interface are not limited in this application. For example, the electronic device may perform matching of the facial feature when determining whether to trigger the display interface. When determining that the user triggers the display interface and completing matching of the facial feature of the user, the electronic device enters the display interface, as shown in FIG. 9(a).

Alternatively, the electronic device may first determine whether the user triggers the display interface. When determining that the user triggers to switch from the screen-off interface to the display interface, the electronic device obtains a facial feature of the user within specific time to perform matching. When the matching succeeds, the display interface as shown in FIG. 9(a) is entered.

Alternatively, the electronic device may first perform matching of a user face. When the matching of the facial feature succeeds, the electronic device determines whether the user triggers the display interface. When it is determined that the user triggers to switch from the screen-off interface to the display interface, the display interface as shown in FIG. 9(a) is entered.

In a possible implementation, when the electronic device determines whether the user triggers the display interface and performs matching of the facial feature in sequence, there should be a specific time limit between the two. The specific time is preset duration, for example, 3 seconds. Specifically, when the electronic device determines that the user triggers the display interface, if no facial feature of the user is obtained for matching within 3 seconds, even if the facial feature of the user is obtained for matching 3 seconds after the display interface is triggered, an application corresponding to the user cannot be started. Based on the time limitation, security of displaying the application corresponding to the user may be improved. In this case, a preset application may be displayed on the display interface. For example, the application may be a frequently used application or interface such as a calendar card, a weather card, and a clock card.

The following specifically describes, in this application, how to determine, based on the user information, an application recently and frequently used by a current user or a specific interface in the application.

In a possible implementation, when the user information is the facial feature of the user, the electronic device compares the facial feature of the current user with one or more previously stored facial features of the user. If a matching degree between the currently obtained facial feature of the user and a facial feature that is of the user A and that is previously stored in the electronic device is greater than a preset value, content corresponding to the user A is displayed.

In another possible implementation, when the user information is the walking posture of the user, the electronic device compares the current walking posture of the user with one or more previously stored walking postures of the user. If a matching degree between the currently obtained walking posture of the user and a previously stored walking posture of the user A in the electronic device is greater than a preset value, content corresponding to the user A is displayed.

In still another possible implementation, when the user information is the wearable device of the user, information of wearable devices corresponding to different users may be bound to the electronic device in advance. Then, when the user carries a wearable device and approaches the electronic device, the electronic device recognizes information of the wearable device to determine a user corresponding to the wearable device.

For example, the information of the wearable device may be a type, a model, or the like of the device, for example, a watch. After obtaining information of a watch currently worn by the user, the camera on the electronic device compares the information of the watch with one or more pieces of previously stored wearable information. If a matching degree between the information of the watch and previously stored information of a wearable device of the user A in the electronic device is greater than a preset value, content corresponding to the user A is displayed.

It should be understood that, when different users approach the electronic device, the electronic device obtains different user information, and the different user information corresponds to different display content. In this way, the electronic device can finally implement personalized display. As shown in FIG. 9(a), when the user A approaches the electronic device, a movie watching history displayed on the electronic device is a recently played "Brave Stride", and an attended course is a "15-minute high-intensity interval training". As shown in FIG. 9(b), when a user B approaches the electronic device, a movie watching history displayed on the electronic device is a recently played "On the Road", and an attended course is a "Business English course".

In a possible implementation, when the electronic device recognizes that the user information indicates a child, an application or a program recently and frequently used by the child is displayed, for example, a cartoon or a child program. In addition, when recognizing that the user information indicates a child, the electronic device may automatically filter out a program that is not suitable for the child to watch.

In another possible implementation, when the electronic device recognizes that the user information indicates an elderly person, an application or a program recently and frequently used by the elderly person is displayed, for example, a regimen program or a square dance. In addition, when recognizing that the user information indicates an elderly person, the electronic device may enlarge a font on the display, thereby making it easier for the elderly person to read.

In some embodiments, when different users approach the electronic device, permissions for starting an application are different. For example, a chat interface is an interface frequency used the user A. When the user B approaches the electronic device, although the chat interface is displayed on the electronic device, the user A cannot open the interface. In this implementation, privacy of different users can be ensured.

According to the foregoing technical solution, when the electronic device is on the screen-off interface, the always on display AOD interface, or the screen saver interface, the electronic device may sense a distance between the user and the electronic device, a motion direction of the user, and an included angle between a motion trajectory of the user and a normal line of the electronic device. When the distance between the user and the electronic device meets a first threshold, the included angle between the motion trajectory of the user and the normal line of the electronic device meets a second threshold, and the motion direction of the user is a direction toward the electronic device, the electronic device obtains the user information by using the camera, determines, based on the user information, an application recently and frequently used by the current user or a specific interface in the application, and displays the frequently used application or specific interface corresponding to the user information on the electronic device. According to the method, specific content is displayed for a specific user in a manner of combining the user information and the user trajectory, so that the user more conveniently and quickly starts or opens an application or an interface that is most frequently used. This improves user experience.

For the screen-off interface, the always on display AOD interface, or the screen saver interface provided in embodiments of this application, in addition to the interface in FIG. 4(a), the interface in FIG. 7(a), and the interface in FIG. 8(a), other content may be further displayed on the screen-off interface, the always on display AOD interface, or the screen saver interface. For example, information corresponding to a time-sensitive event may be displayed. The time-sensitive event may be understood as a schedule to-do, a reserved episode, a live broadcast, an event, a course, or the like specified by the user. The time-sensitive event may be displayed in a form of a time-sensitive "toast" or a time-sensitive task card. The following specifically describes how the electronic device displays the time-sensitive event on the screen-off interface.

It should be understood that the time-sensitive event may be displayed by using a time-sensitive task component, and the component includes but is not limited to a form of a time-sensitive toast, a time-sensitive task card, or the like.

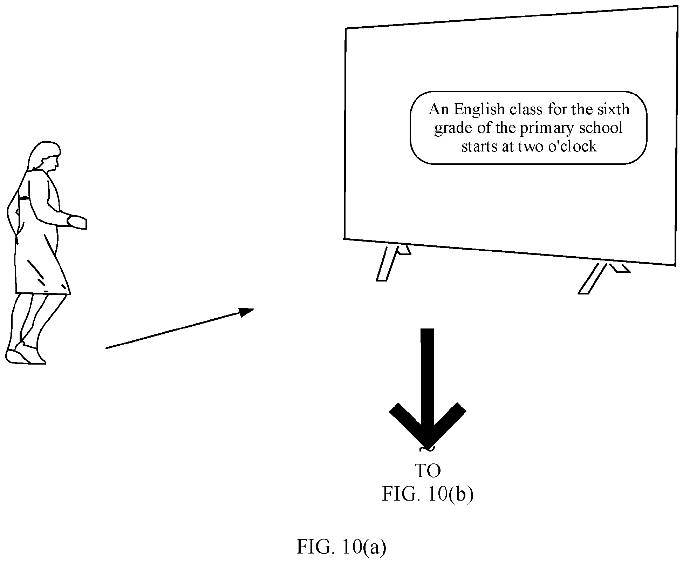

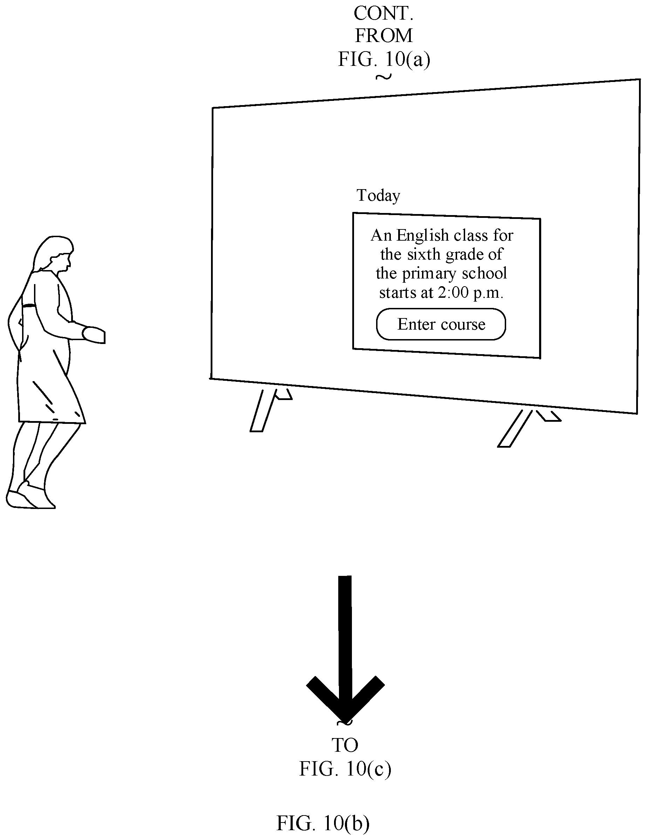

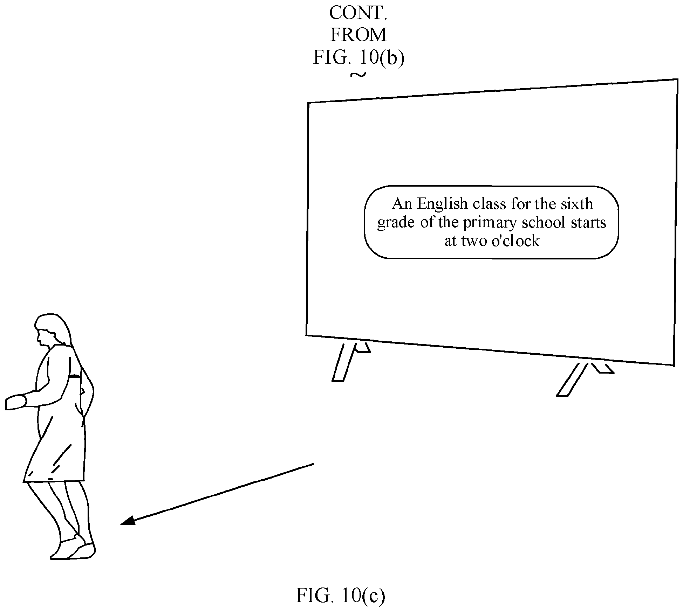

FIG. 10(a), FIG. 10(b), and FIG. 10(c) are a diagram of still another example of a display interface of an electronic device according to an embodiment of this application. FIG. 10(a) shows that the electronic device is on a screen-off interface. A "toast" prompt is displayed on the screen-off interface, and content on the "toast" is "An English class for the sixth grade of the primary school starts at two o'clock".

In a possible implementation, after a user specifies a to-do list, the to-do list is constantly displayed on a screen-off interface in a form of a "toast".

In another possible implementation, when the prompt "toast" is displayed on the electronic device when an event occurs or at a moment before an event occurs, for example, when prompt content on the prompt "toast" is "An English class for the sixth grade of the primary school starts at two o'clock", the prompt "toast" may be displayed on the screen-off interface at about 12:00 noon.

At a location where the user is at a specific distance from a display of the electronic device, when a distance between the user and the electronic device meets a first threshold, an included angle between a motion trajectory of the user and a normal line of the electronic device meets a second threshold, and a motion direction of the user is toward the electronic device, the prompt "toast" gradually becomes larger, the electronic device switches from an interface in FIG. 10(a) to an interface in FIG. 10(b), the "toast" prompt becomes a time-sensitive task card, and detailed content of the "toast" prompt is displayed on the time-sensitive task card. For example, the content on the time-sensitive task card may be "An English class for the sixth grade of the primary school starts at 2:00 p.m.", and the user may enter the interface by triggering "Enter course" on the display.

It should be noted that, for a specific process in which the electronic device senses the distance between the user and the electronic device, the motion direction of the user, and the included angle between the motion trajectory of the user and the normal line of the electronic device, and how the electronic device determines whether the distance between the user and the electronic device meets the first threshold, whether the motion direction of the user is a direction toward the electronic device, and whether the included angle between the motion trajectory of the user and the normal line of the electronic device meets the second threshold, refer to the descriptions in FIG. 4(a), FIG. 4(b), and FIG. 4(c). Details are not described herein again.

In a possible implementation, after the user finishes browsing the content displayed on the electronic device and the user turns away, the electronic device switches from the interface in FIG. 10(b) to an interface in FIG. 10(c). As shown in FIG. 10(c), an interface of the "toast" prompt is displayed, where the interface of the "toast" prompt is the same as the interface in FIG. 10(a), and displays "An English class for the sixth grade of the primary school starts at two o'clock".

For example, after the user finishes browsing the content displayed on the electronic device, the user turns away, and the electronic device detects no facial feature of the user, the electronic device switches from the interface in FIG. 10(b) to the interface of the "toast" prompt in FIG. 10(c). This can reduce power consumption of the electronic device, and save energy.

For another example, when the electronic device determines that the distance between the user and the electronic device does not meet the first threshold, or the motion of the user is backward the electronic device, or the included angle between the direction of the motion trajectory of the user and the normal line of the electronic device does not meet the second threshold, the electronic device switches from the interface in FIG. 10(b) to the interface of the "toast" prompt in FIG. 10(c). Similarly, this can reduce power consumption of the electronic device and save energy.

In another possible implementation, at a location where the user is at a specific distance from a display of the electronic device, when a distance between the user and the electronic device meets a first threshold, an included angle between a motion trajectory of the user and a normal line of the electronic device meets a second threshold, and a motion direction of the user is toward the electronic device, a prompt "toast" gradually becomes larger, the electronic device switches from an interface in FIG. 10(a) to an interface in FIG. 10(b), and the "toast" prompt becomes a time-sensitive task card, indicating that the user has finished browsing a time-sensitive event displayed on the electronic device. In this case, when the user turns away, a reminder card on the electronic device may be directly hidden without being switched to an interface of a "toast" prompt in FIG. 10(c).

In still another possible implementation, after finishing browsing a time-sensitive event displayed on the electronic device, the user may interact with the electronic device in a manner such as a voice, a gesture, or an operation on a remote control, indicating that the user has browsed a related schedule on a reminder card. In this case, when the user turns away, the reminder card on the electronic device may be directly hidden without being switched to a "toast".

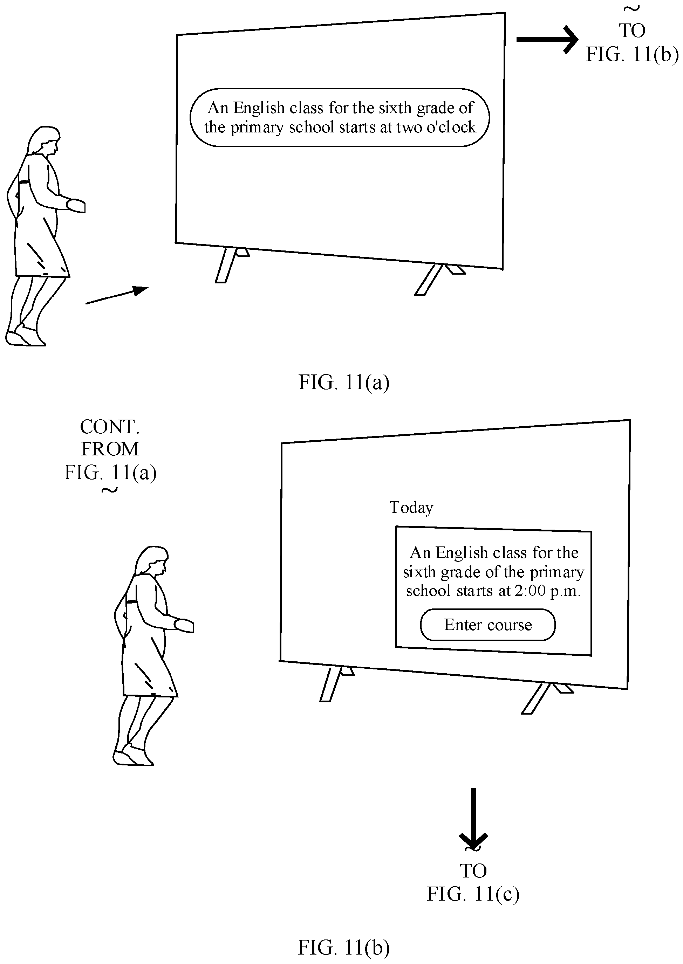

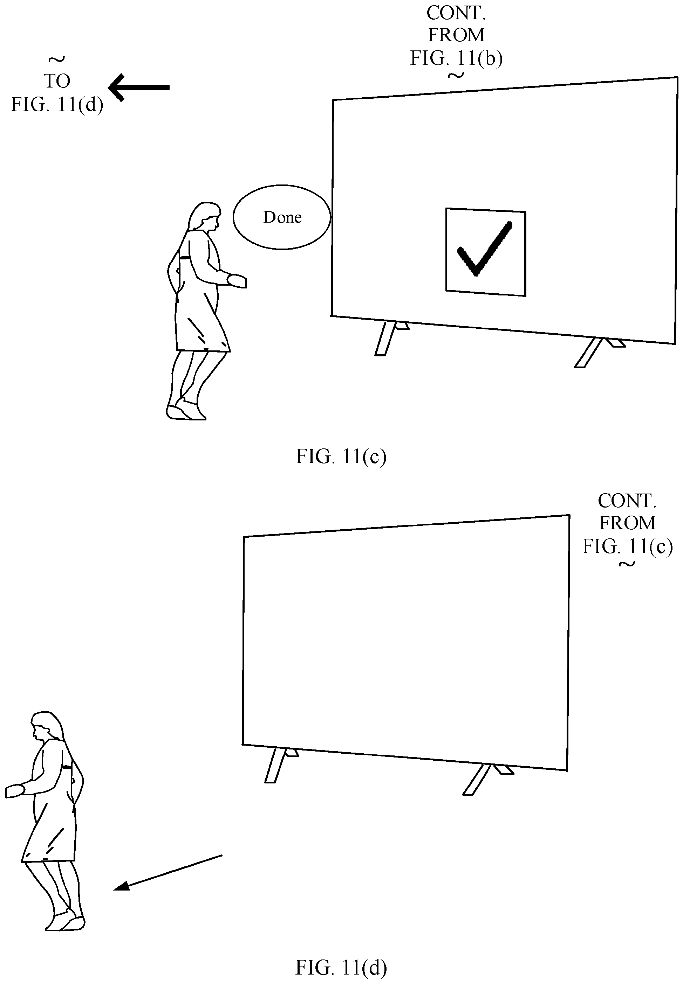

The following uses voice interaction between the user and the electronic device as an example for description. FIG. 11(a), FIG. 11(b), FIG. 11(c), and FIG. 11(d) are a diagram of still another example of a display interface of an electronic device according to an embodiment of this application. As shown in FIG. 11(a), when the electronic device is on a screen-off interface, the screen-off interface displays a "toast" prompt, and content on the "toast" is "An English class for the sixth grade of the primary school starts at two o'clock".

At a location where the user is at a specific distance from a display of the electronic device, when a distance between the user and the electronic device meets a first threshold, an included angle between a motion trajectory of the user and a normal line of the electronic device meets a second threshold, and a motion direction of the user is toward the electronic device, the prompt "toast" gradually becomes larger, the electronic device switches from an interface in FIG. 11(a) to an interface in FIG. 11(b), the "toast" prompt becomes a time-sensitive task card, and detailed content of the "toast" prompt is displayed on the time-sensitive task card. For example, the content on the time-sensitive task card may be "An English class for the sixth grade of the primary school starts at 2:00 p.m.", and the user may enter the interface by triggering "Enter course" on the display. After the user finishes browsing the content displayed on the card, the user may indicate, by using a voice, that the prompt content of the task card has been learned. For example, the user may say "Done", "Understood", "Got it", or the like. After obtaining a voice indication of the user, the electronic device switches from the interface in FIG. 11(b) to an interface in FIG. 11(c). As shown in FIG. 11(c), an identifier "√" appears on the electronic device, indicating that the electronic device receives an instruction that the user has finished browsing the information, that is, the to-do list is completed. Finally, after the user turns away, the electronic device switches from the interface in FIG. 11(c) to a screen-off interface in FIG. 11(d).

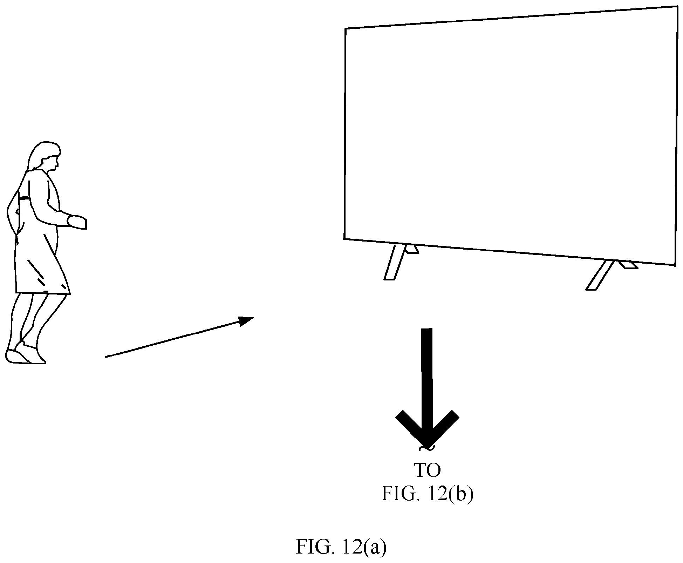

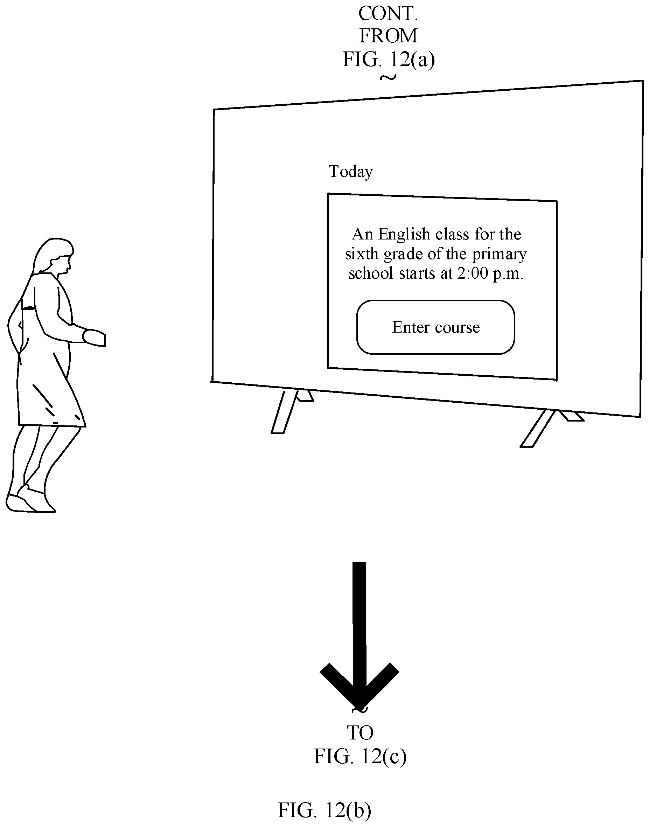

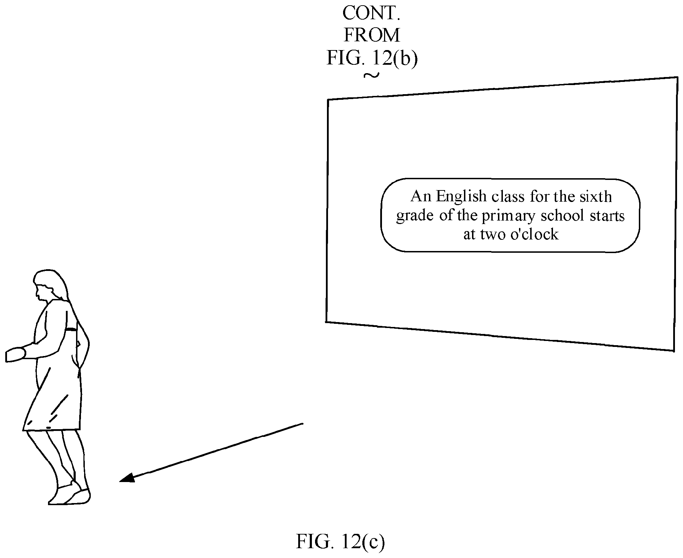

In a possible implementation, the time-sensitive event may not be reminded by using a "toast", but may be directly reminded by using a time-sensitive task card. To be specific, when the user approaches the electronic device, a time-sensitive task card appears on the electronic device, and a to-do list of the user is displayed by using the time-sensitive task card. FIG. 12(a), FIG. 12(b), and FIG. 12(c) are a diagram of still another example of a display interface of an electronic device according to an embodiment of this application. FIG. 12(a) shows that the electronic device is on a screen-off interface.

At a location where a user is at a specific distance from a display of the electronic device, when a distance between the user and the electronic device meets a first threshold, an included angle between a motion trajectory of the user and a normal line of the electronic device meets a second threshold, and a motion direction of the user is toward the electronic device, the electronic device switches from the interface in FIG. 12(a) to an interface in FIG. 12(b), to display a time-sensitive task card including a time-sensitive event. For example, content on the time-sensitive task card may be "An English class for the sixth grade of the primary school starts at 2:00 p.m.", and the user may enter the interface by triggering "Enter course" on the display.

In a possible implementation, after the user finishes browsing content displayed on the electronic device and the user turns away, the electronic device switches from the interface in FIG. 12(b) to an interface in FIG. 12(c), and displays an interface including a "toast" prompt in FIG. 12(c). The interface in FIG. 12(c) is different from the interface in FIG. 12(a). The interface in FIG. 12(c) displays the interface of the "toast" prompt, and content displayed in the "toast" is partial information of content in a time-sensitive task card. By displaying the "toast" prompt, the user may be reminded again to pay attention to a to-do list.

In another possible implementation, at a location where the user is at a specific distance from a display of the electronic device, when a distance between the user and the electronic device meets a first threshold, an included angle between a motion trajectory of the user and a normal line of the electronic device meets a second threshold, and a motion direction of the user is toward the electronic device, the electronic device switches from the interface in FIG. 12(a) to an interface in FIG. 12(b), to display a time-sensitive task card including a time-sensitive event. When the user turns away, it indicates that the user has finished browsing the time-sensitive event displayed on the electronic device, and a reminder card on the electronic device may be directly hidden without being switched to an interface of a "toast" prompt in FIG. 12(c).

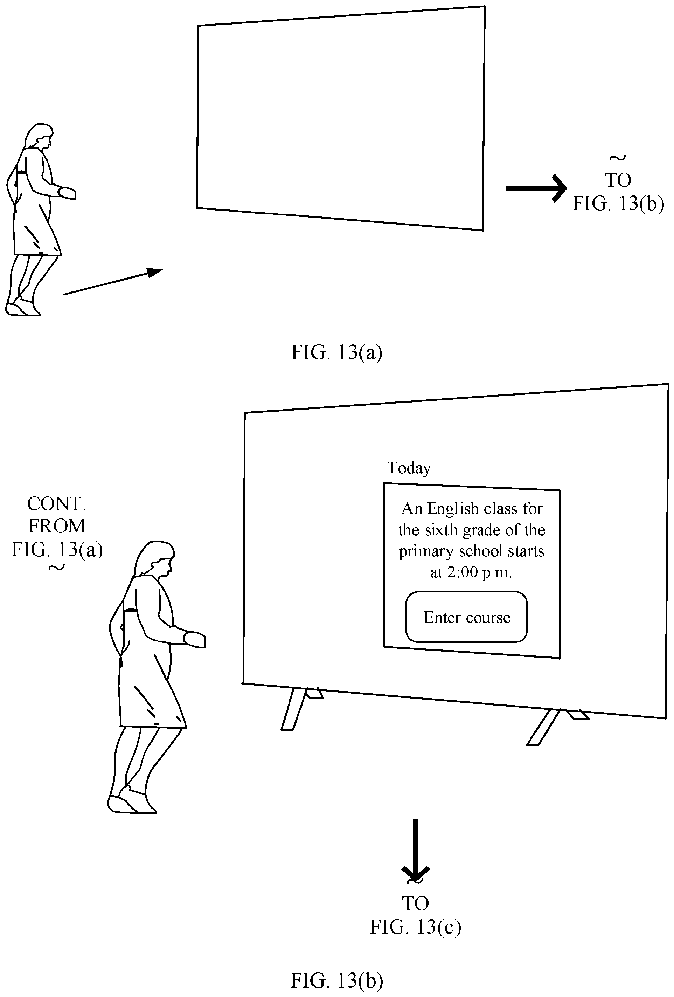

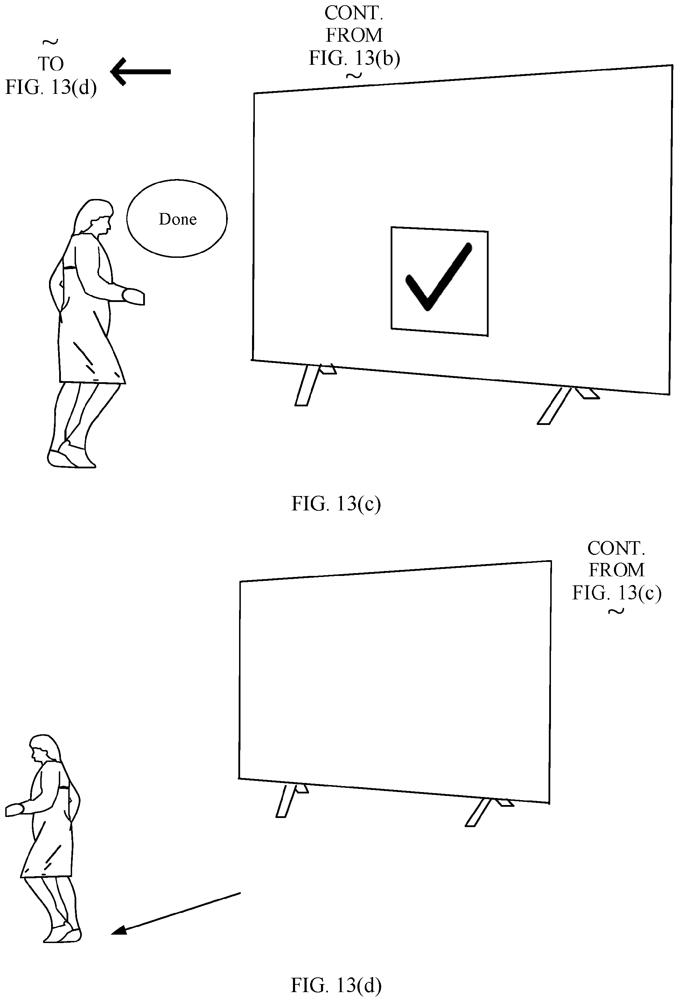

In still another possible implementation, after finishing browsing content displayed on the electronic device, the user may interact with the electronic device in a manner such as a voice, a gesture, or an operation on a remote control, indicating that the user has browsed a related schedule on a reminder card. In this case, when the user turns away, the reminder card on the electronic device may be directly hidden without being switched to a "toast". The following uses voice interaction as an example. FIG. 13(a), FIG. 13(b), FIG. 13(c), and FIG. 13(d) are a diagram of still another example of a display interface of an electronic device according to an embodiment of this application. FIG. 13(a) shows that the electronic device is on a screen-off interface.

At a location where a user is at a specific distance from a display of the electronic device, when a distance between the user and the electronic device meets a first threshold, an included angle between a motion trajectory of the user and a normal line of the electronic device meets a second threshold, and a motion direction of the user is toward the electronic device, the electronic device switches from the interface in FIG. 13(a) to an interface in FIG. 13(b), to display a time-sensitive task card including a time-sensitive event. For example, content on the time-sensitive task card may be "An English class for the sixth grade of the primary school starts at 2:00 p.m.", and the user may enter the interface by triggering "Enter course" on the display. After the user finishes browsing the content displayed on the card, the user may indicate, by using a voice, that the prompt content of the task card has been learned. For example, the user may say "Done", "Understood", "Got it", or the like. After obtaining a voice indication of the user, the electronic device switches from the interface in FIG. 13(b) to an interface in FIG. 13(c). As shown in FIG. 13(c), an identifier "√" appears on the electronic device, indicating that the electronic device receives an instruction that the user has finished browsing the information, that is, the to-do list is completed. Finally, after the user turns away, the electronic device switches from the interface in FIG. 13(c) to a screen-off interface in FIG. 13(d).

In comparison with a case in which a screen-off interface is directly displayed after the user turns away, in this case, after the user turns away, the electronic device displays an interface of a prompt "toast", so that the user can be reminded again that a to-do list needs to be processed.

In some possible implementations of this application, after a time-sensitive card is displayed, display of an application or a specific interface frequently used by the user may be triggered by using the time-sensitive card, and then the electronic device jointly displays the time-sensitive card and the application or the specific interface frequently used by the user on the display interface. The following provides description with reference to specific examples.

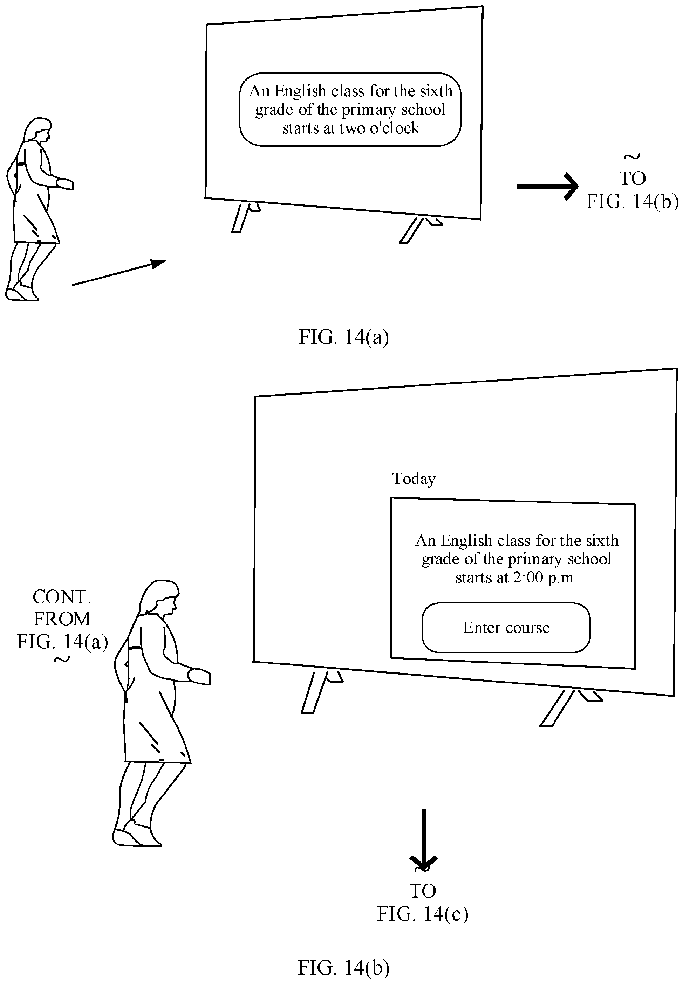

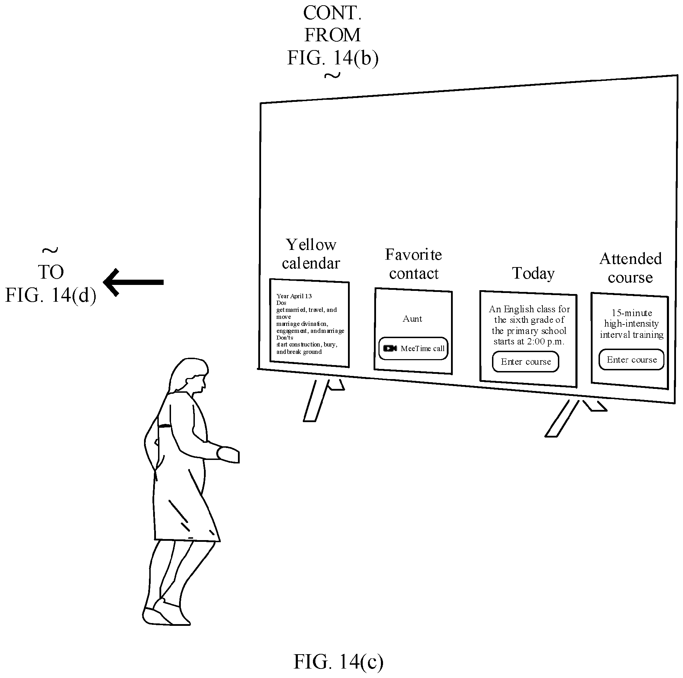

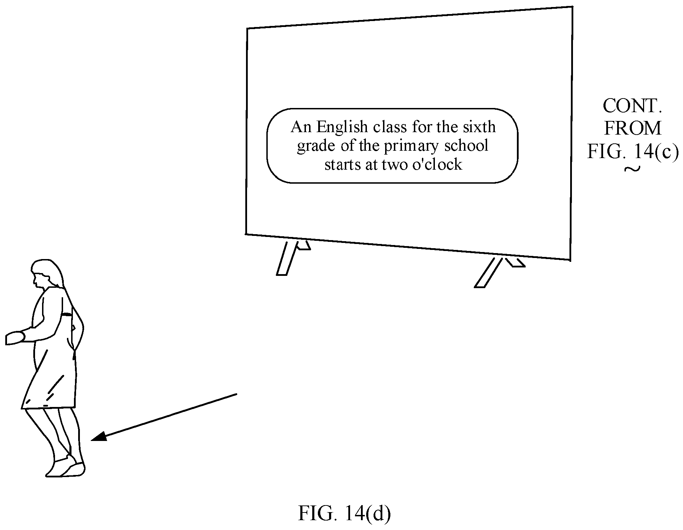

For example, FIG. 14(a), FIG. 14(b), FIG. 14(c), and FIG. 14(d) are a diagram of still another example of a display interface of an electronic device according to an embodiment of this application. As shown in FIG. 14(a), when the electronic device is on a screen-off interface, the screen-off interface displays a "toast" prompt, and content on the "toast" is "An English class for the sixth grade of the primary school starts at two o'clock".

At a location where a user is at a specific distance from a display of the electronic device, when a distance between the user and the electronic device meets a first threshold, an included angle between a motion trajectory of the user and a normal line of the electronic device meets a second threshold, and a motion direction of the user is toward the electronic device, the prompt "toast" gradually becomes larger, the electronic device switches from the interface in FIG. 14(a) to an interface in FIG. 14(b), the "toast" prompt becomes a time-sensitive task card, and detailed content of the "toast" prompt is displayed on the time-sensitive task card. For example, the content on the time-sensitive task card may be "An English class for the sixth grade of the primary school starts at 2:00 p.m.", and the user may enter the interface by triggering "Enter course" on the display.

After displaying the time-sensitive card, the electronic device switches from the interface in FIG. 14(b) to an interface in FIG. 14(c). Specifically, the time-sensitive card moves downward. When the time-sensitive card moves downward, the electronic device displays an application or a specific interface frequently used by the user, and finally displays the time-sensitive card and the application or the specific interface frequently used on an interface at the same time, for example, on the interface in FIG. 14(c). Content on the interface may be a yellow calendar, a favorite contact, a time-sensitive card, and an attended course that are displayed.

After the user finishes browsing the content displayed on the electronic device and the user turns away, the electronic device hides the application or the specific interface frequently used by the user on the interface in FIG. 14(c) of the user, and the time-sensitive card moves upward and is zoomed out to be a "toast" prompt. For example, the electronic device switches from the interface in FIG. 14(c) to an interface in FIG. 14(d), and the interface in FIG. 14(d) includes the "toast" prompt. For a specific process in which the electronic device switches from the interface in FIG. 14(c) to the interface in FIG. 14(d), refer to the description in FIG. 10(a), FIG. 10(b), and FIG. 10(c) above. Details are not described herein again.

It should be noted that, time for displaying an application or a specific interface frequently used by the user, and time for displaying a time-sensitive card are not limited. For example, when a time-sensitive "toast" becomes larger and becomes a time-sensitive card, the electronic device displays an application or a specific interface frequently used by the user; or after a time-sensitive "toast" becomes larger and becomes a time-sensitive card, the electronic device displays an application or a specific interface frequently used by the user.

In some possible implementations of this application, after a time-sensitive card is displayed, display of an application or a specific interface frequently used by the user may be triggered by using the time-sensitive card, and then the electronic device jointly displays the time-sensitive card and the application or the specific interface frequently used by the user on the display interface, which is also applicable to an always on display AOD interface. In this case, the always on display AOD interface may display a time-sensitive "toast" prompt and important information. The important information may be content such as a display time, an incoming call, a message, battery information, and a push message.

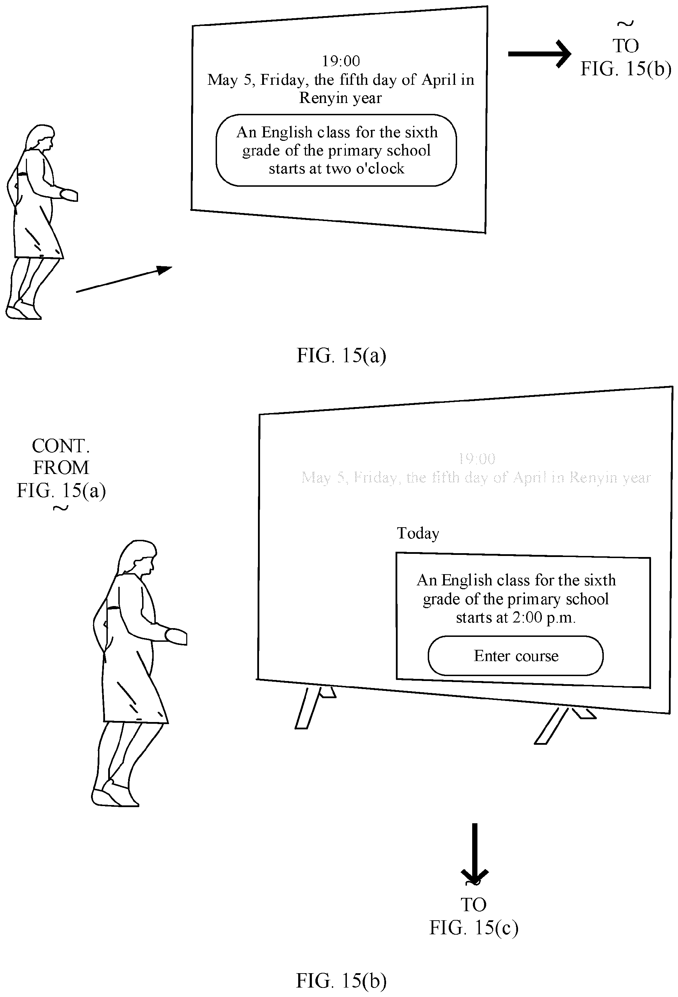

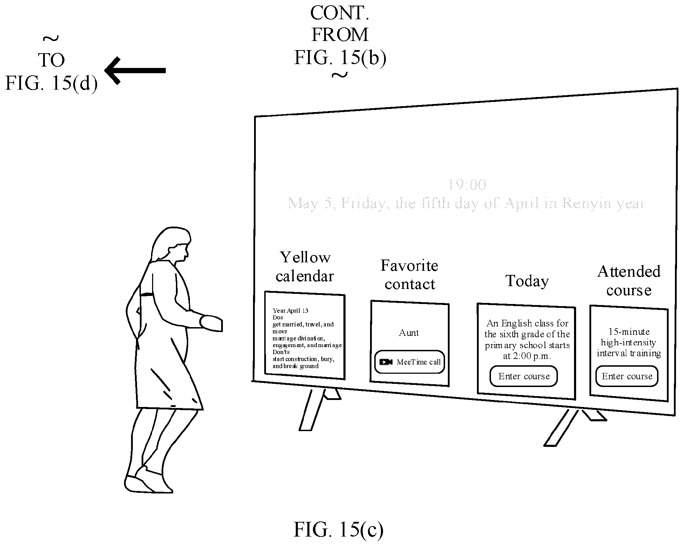

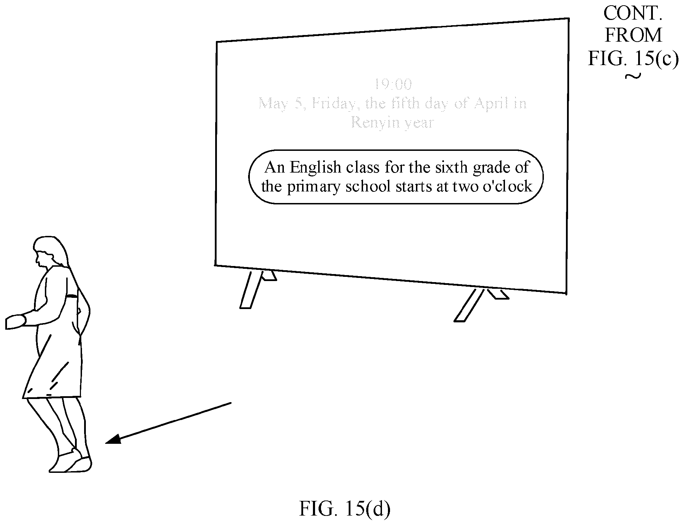

FIG. 15(a), FIG. 15(b), FIG. 15(c), and FIG. 15(d) are a diagram of still another example of a display interface of an electronic device according to an embodiment of this application. FIG. 15(a) shows that the electronic device is on an always on display AOD interface. As shown in FIG. 15(a), the always on display AOD interface includes a time-sensitive "toast" prompt, which is "An English class for the sixth grade of the primary school starts at two o'clock", and the important information is time, for example, "19:00 May 5, Friday, the fifth day of April in Renyin year".

At a location where a user is at a specific distance from a display of the electronic device, when a distance between the user and the electronic device meets a first threshold, an included angle between a motion trajectory of the user and a normal line of the electronic device meets a second threshold, and a motion direction of the user is toward the electronic device, the prompt "toast" gradually becomes larger, the electronic device switches from the interface in FIG. 15(a) to an interface in FIG. 15(b), the "toast" prompt becomes a time-sensitive task card, and detailed content of the "toast" prompt is displayed on the time-sensitive task card. For example, the content on the time-sensitive task card may be "An English class for the sixth grade of the primary school starts at 2:00 p.m.", and the user may enter the interface by triggering "Enter course" on the display. It can be seen from FIG. 15(b) that, after a time-sensitive "toast" becomes a time-sensitive card, display time on the display is blurred, so that the user can more clearly see the content on the time-sensitive task card.

After displaying the time-sensitive card, the electronic device switches from the interface in FIG. 15(b) to an interface in FIG. 15(c). Specifically, the time-sensitive card moves downward. When the time-sensitive card moves downward, the electronic device displays an application or a specific interface frequently used by the user, and finally displays the time-sensitive card and the application or the specific interface frequently used on an interface at the same time, for example, on the interface in FIG. 15(c). Content on the interface may be a yellow calendar, a favorite contact, a time-sensitive card, and an attended course that are displayed. Similarly, after a time-sensitive card and an application or a specific interface frequently used by a user are displayed on the display, display time on the display is blurred, so that the user can more clearly see the content on the card.

After the user finishes browsing the content displayed on the electronic device and the user turns away, the electronic device hides the application or the specific interface frequently used by the user on the interface in FIG. 15(c) of the user, and the time-sensitive card moves upward and is zoomed out to be a "toast" prompt. For example, the electronic device switches from the interface in FIG. 15(c) to an interface in FIG. 15(d), and the interface in FIG. 15(d) includes the "toast" prompt. In this case, the display time on the display may be blurred or may not be blurred. In FIG. 15(d), an example in which the display time on the display is blurred is used. To prevent the user from omitting the time-sensitive event, the time displayed on the display may be blurred, and a prompt "toast" that carries a time-sensitive event is highlighted.

In the foregoing technical solutions, the time-sensitive event is preset on the electronic device. When the electronic device is on the screen-off interface, the always on display AOD interface, or the screen saver interface, the electronic device may sense the distance between the user and the electronic device, the motion direction of the user, and the included angle between the motion trajectory of the user and the normal line of the electronic device. When the distance between the user and the electronic device meets the first threshold, the included angle between the motion trajectory of the user and the normal line of the electronic device meets the second threshold, and the motion direction of the user is the direction toward the electronic device, the electronic device displays at least one of the application frequently used by the user, the specific interface, or the time-sensitive event on the screen-off interface, the always on display AOD interface, or the screen saver interface. According to the method, the time-sensitive event specified by the user is quickly displayed, so that an operation of starting an application can be simplified, and user experience is further improved.

The foregoing embodiments specifically describe how to quickly display an application or a specific interface that is frequently used on an electronic device. The following embodiments of this application further provide a method for quickly starting or opening an application or a specific interface, for example, how to quickly enter a movie watching interface or how to quickly start an audio and video communication application on an electronic device.

When the electronic device displays an application frequently used by a user, a program frequently watched by a user, or a time-sensitive event, and obtains at least one of first operations of the user, the electronic device opens, in response to the first operation, at least one of the application frequently used by the user, the program frequently watched by the user, or the time-sensitive event.

Optionally, the first operation includes at least one of an air gesture, a voice operation, the user approaching the electronic device, or using an OK button of a remote control. In this implementation, at least one of the application frequently used by the user, the program frequently used by the user, or the time-sensitive event may be quickly opened by making an air gesture by the user.

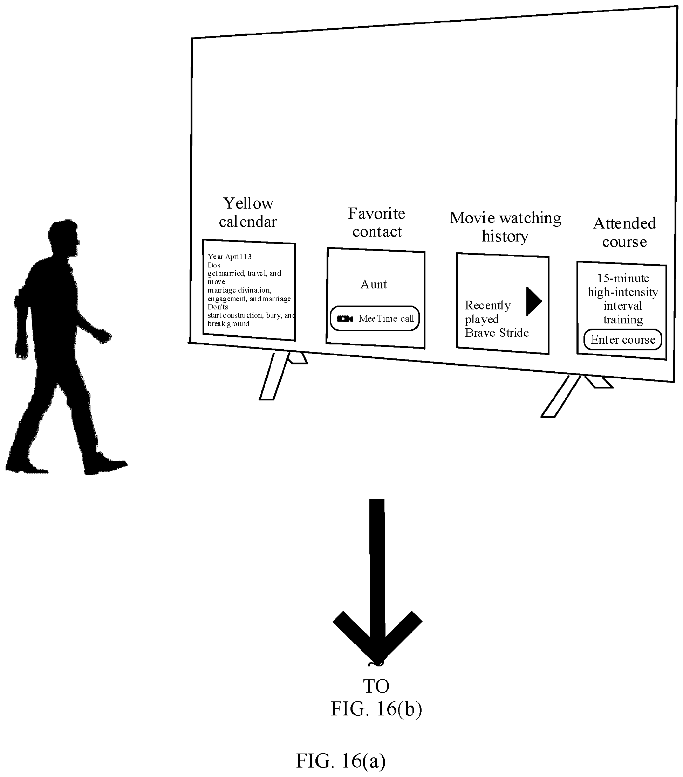

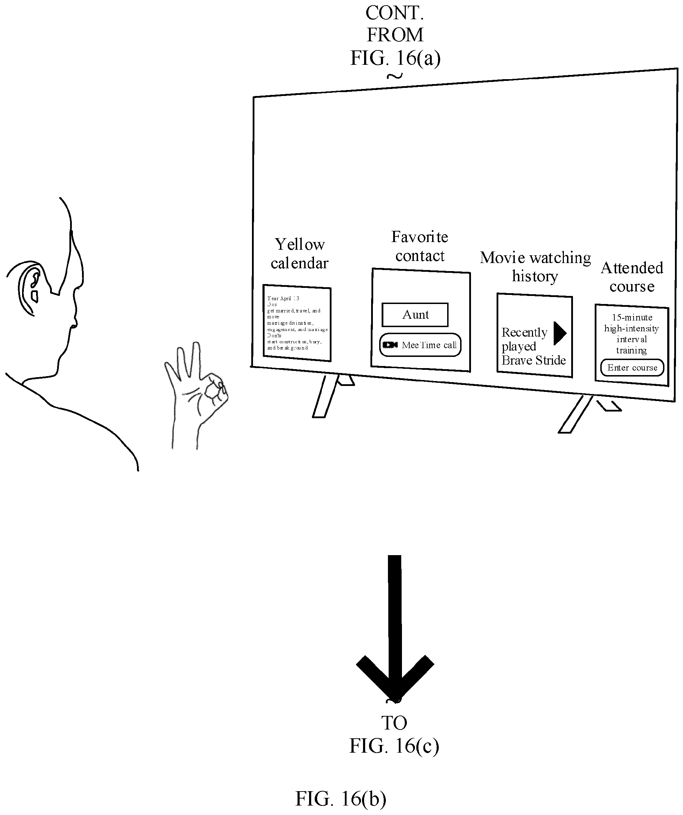

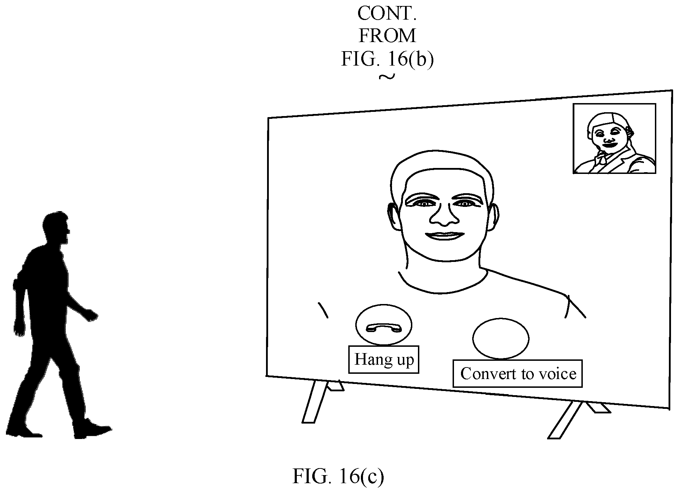

For example, FIG. 16(a), FIG. 16(b), and FIG. 16(c) are a diagram of an example of a method for starting an application according to an embodiment of this application. As shown in FIG. 16(a), a display interface in FIG. 16(a) may be the same as the display interface in FIG. 4(b), FIG. 7(b), FIG. 8(b), or FIG. 14(c). After a user B approaches an electronic device, at a location where the user is at a specific distance from a display of the electronic device, when a distance between the user and the electronic device meets a first threshold, an included angle between a motion trajectory of the user and a normal line of the electronic device meets a second threshold, and a motion direction of the user is toward the electronic device, the display of the electronic device displays an application or a specific interface recently and frequently used by the user B. In this case, when the user B wants to quickly enter a "Favorite contact" and establish a MeeTime call with the aunt, and a check box on the display is located on a "Favorite contact" task card, the user B may perform an operation by making an air gesture shown in FIG. 16(b), and the electronic device recognizes the air gesture of the user to quickly open an interface for establishing the MeeTime call with the aunt, for example, an interface shown in FIG. 16(c). For example, as shown in FIG. 16(b), an air gesture "OK" is used as an example.

It should be understood that a location of a focus on the display may be set to a location of a center card. In a case in which N application cards are displayed on the display, the location of the focus is a location of an [(N+1)/2]^{th} card when N is an odd number; or the location of the focus may be a location of an (N/2)^{th} card when N is an even number. Certainly, the location of the focus on the display may be set based on a specific situation, for example, a leftmost or rightmost location of the display. This is not limited in embodiments of this application. For example, as shown in FIG. 16(b), there are four application cards on the display, and the location of the focus is a 2^{nd} application card. When the user B approaches the display, the application may be quickly started.

When the focus on the display is just on an application or a specific interface that the user wants to start or open, the user may directly start or open the application or the specific interface by making a specific air gesture. When the focus on the display is not on a task card corresponding to an application or a specific interface that the user wants to start or open, the user needs to switch an application card until the focus is on content that the user wants to watch.

When the electronic device displays one or more of the following: an application frequently used by the user, a program frequently watched by the user, or a time-sensitive event, and a focus displayed by the electronic device is on a first application, a first program, or a first time-sensitive event, the method further includes: obtaining a second operation of the user; and in response to the second operation, displaying, by the electronic device, the focus on a second application, a second program, or a second time-sensitive event.

It should be understood that the application frequently used by the user includes the first application, the program frequently watched by the user includes the first program, and the time-sensitive event includes the first time-sensitive event.

Optionally, in response to the second operation, the focus displayed by the electronic device may move. For example, when the focus displayed by the electronic device is on the first application, in response to the second operation, the focus displayed by the electronic device moves to the second application, the second program, or the second time-sensitive event.

Optionally, in response to the second operation, the focus displayed by the electronic device does not move, and an application that needs to be switched, the program that is frequently watched by the user, or the time-sensitive event moves. For example, when the focus displayed by the electronic device is on the first application, in response to the second operation, the second application, the second program, or the second time-sensitive event moves to the focus displayed by the electronic device.

It should be further understood that the first application and the second application may be the same or different, the first program and the second program may be the same or different, and the first time-sensitive event and the second time-sensitive event may be the same or different. For example, when the focus displayed by the electronic device is on the first application, in response to the second operation, the focus displayed by the electronic device may also be on the first program or the first time-sensitive event.

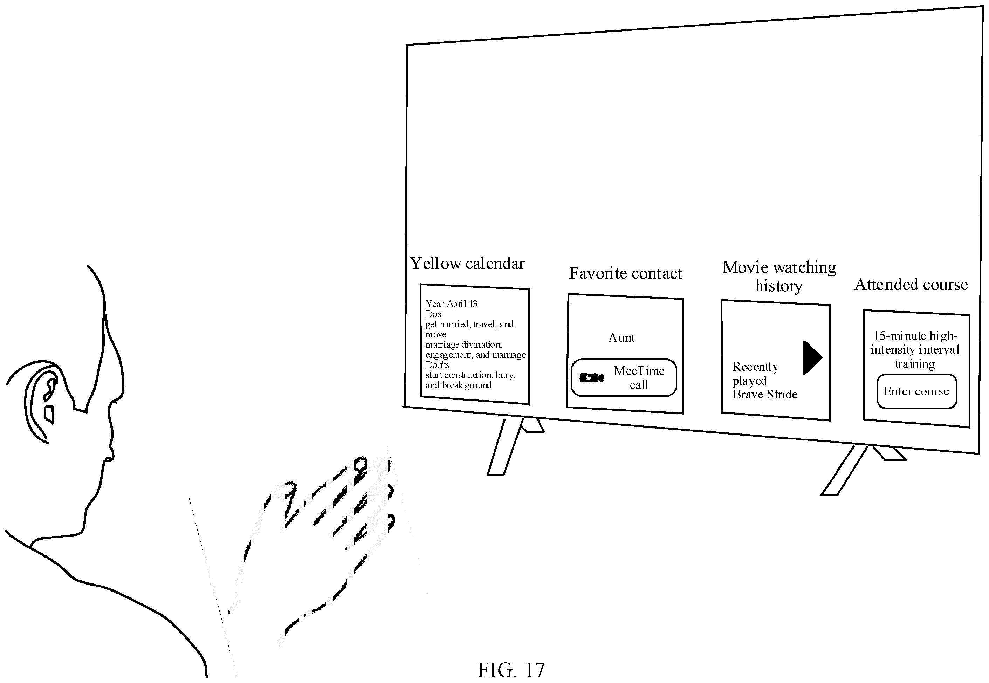

For example, FIG. 17 is a diagram of switching an application card according to an embodiment of this application. As shown in FIG. 17, a user may switch the application card by making a left-right waving gesture. For example, when the focus of the display is on a favorite contact, the user may switch to a movie watching history by making a leftward-waving gesture.

In another possible implementation, when a distance between the user and the electronic device is less than a first distance, the user may take a current focus location on the display as a reference, and switch the focus location on the display by walking leftward or rightward. For example, when the focus of the display is on a favorite contact, the user may move leftward, to switch the favorite contact to a movie watching history.

In another possible implementation, the user may use up, down, left, and right buttons on a remote control to move a location of a cursor corresponding to the remote control on the display, thereby switching the focus location on the display.

It should be further understood that, in this application, the air gesture is a gesture, a motion change of a hand, or the like that is made by the user without touching the screen of the electronic device by the hand but at the first distance from the screen of the electronic device.

It should be further understood that the first distance may be a preset distance. Specifically, the preset distance may be determined based on detection performance of a sensor or a camera. This is not limited in embodiments of this application.

For example, when the electronic device captures a gesture of the user by using a camera, the preset distance is 10 centimeters to 100 centimeters. If the distance is less than 10 centimeters, the user's hand is very close to the camera, and the captured gesture of the user may be incomplete. If the distance is greater than 100 centimeters, the user's hand is too far away from the camera, the captured gesture of the user may be too small, and accuracy of determining the air gesture by the electronic device is reduced. Therefore, integrity of the captured air gesture and accuracy of determining the air gesture can be ensured within a range of the preset distance.

Alternatively, when the electronic device captures a gesture of the user by using a 3D sensor, the preset distance is 10 centimeters to 100 centimeters. In a 3D sensor technology, a target is detected by using components such as an infrared light source, an optical component, and an infrared sensor. If the distance is less than 10 centimeters, the user's hand is very close to the camera, and the detected gesture of the user may be incomplete. If the distance is greater than 100 centimeters, the user's hand is too far away from the sensor, sensitivity of the sensor is reduced, and accuracy of determining the air gesture by the electronic device is reduced. Therefore, integrity of the captured air gesture and accuracy of determining the air gesture can be ensured within a range of the preset distance.

Specifically, in a process of capturing an air gesture, the electronic device may capture the air gesture by using a device such as the camera or the 3D sensor. For example, a shape of the user's hand, motion information of the hand, and the like may be captured by using the camera to recognize the air gesture, thereby mapping the air gesture to a corresponding operation to determine whether an application can be started.

For example, the air gesture may be classified into a static gesture and a dynamic gesture. The static gesture indicates a hand gesture at a moment, for example, a finger bending gesture, a finger curling gesture, a four-finger spread gesture, a C-shaped gesture, an OK gesture, and a V gesture. Examples are not enumerated herein again.

The dynamic gesture is a motion status of a hand in a period of time, including a change of a motion direction of the hand, a motion speed of the hand, a finger in a period of time, and the like, for example, a waving gesture, a fisting gesture, and a gesture of drawing a Z shape. Examples are not enumerated herein again. It should be understood that the period of time herein may be preset duration, for example, 3 seconds. When the user does not change a motion direction, a motion speed, or a finger of the hand within 3 seconds, no dynamic gesture of the user is detected within the 3 seconds.

It should be further understood that the "air gesture" in this application is not limited. For example, the air gesture is not limited to the static gesture and the dynamic gesture listed above.

In some embodiments, each specific air gesture may correspond to different applications or programs. For example, as shown in FIG. 16(a), FIG. 16(b), and FIG. 16(c), an air gesture corresponding to a yellow calendar may be a C-type gesture, an air gesture corresponding to a favorite contact may be an OK gesture, a gesture corresponding to a movie watching history may be a V-type gesture, and a gesture corresponding to an attended course may be a dynamic gesture, namely, a gesture of drawing a Z shape. In this case, when the user wants to open the favorite contact, the user may perform an operation by making an air gesture, namely, the OK gesture, as shown in FIG. 16(b), and the electronic device recognizes the air gesture of the user to quickly open an interface for establishing a MeeTime call with the aunt. In this implementation, a focus on the display does not need to be moved, thereby simplifying steps of starting an application, and further improving user experience.

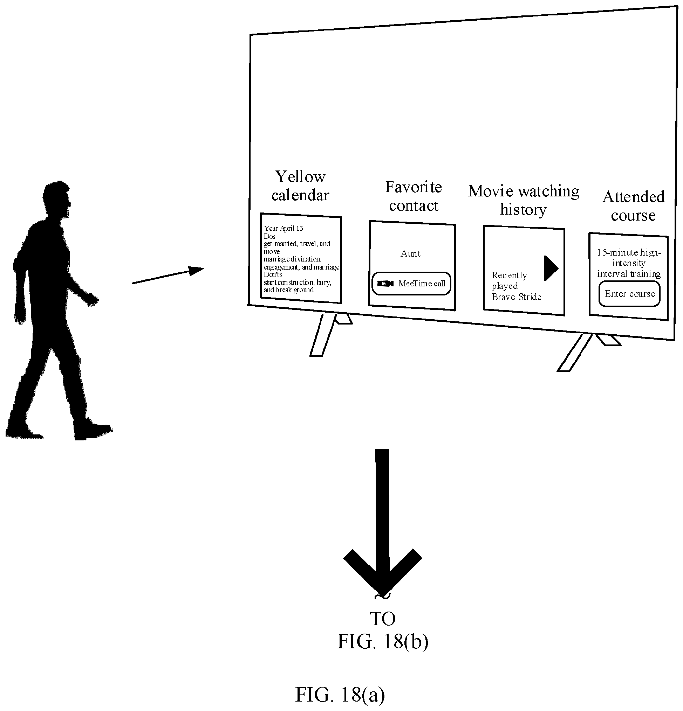

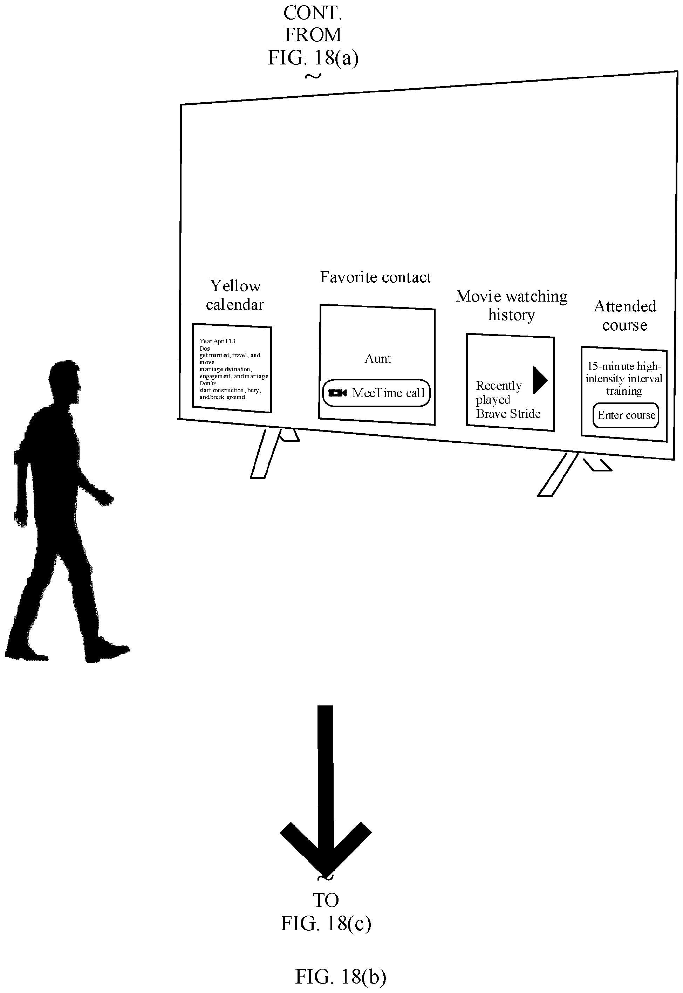

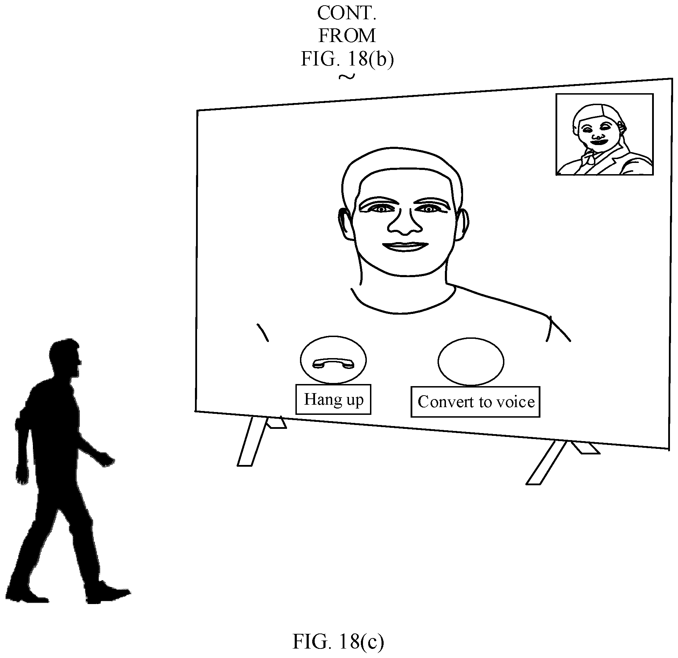

FIG. 18(a), FIG. 18(b), and FIG. 18(c) are a diagram of another example of a method for starting an application according to an embodiment of this application. As shown in FIG. 18(a), after a user B approaches an electronic device, at a location where the user is at a specific distance from a display of the electronic device, when a distance between the user and the electronic device meets a first threshold, an included angle between a motion trajectory of the user and a normal line of the electronic device meets a second threshold, and a motion direction of the user is toward the electronic device, the display of the electronic device displays an application or a specific interface recently and frequently used by the user B. In this case, when the user B wants to quickly enter a "Favorite contact" and establish a MeeTime call with the aunt, the user B may approach the electronic device again, as shown in FIG. 18(b). When the electronic device recognizes that the distance between the user and the electronic device meets a second distance, an interface for establishing the MeeTime call with the aunt is quickly opened, as shown in FIG. 18(c).

It should be noted that, when the user approaches the electronic device again to reach the second distance, the application may be quickly started, where the second distance may be a preset distance. The preset distance may be set based on a specific situation. This is not limited in embodiments of this application.

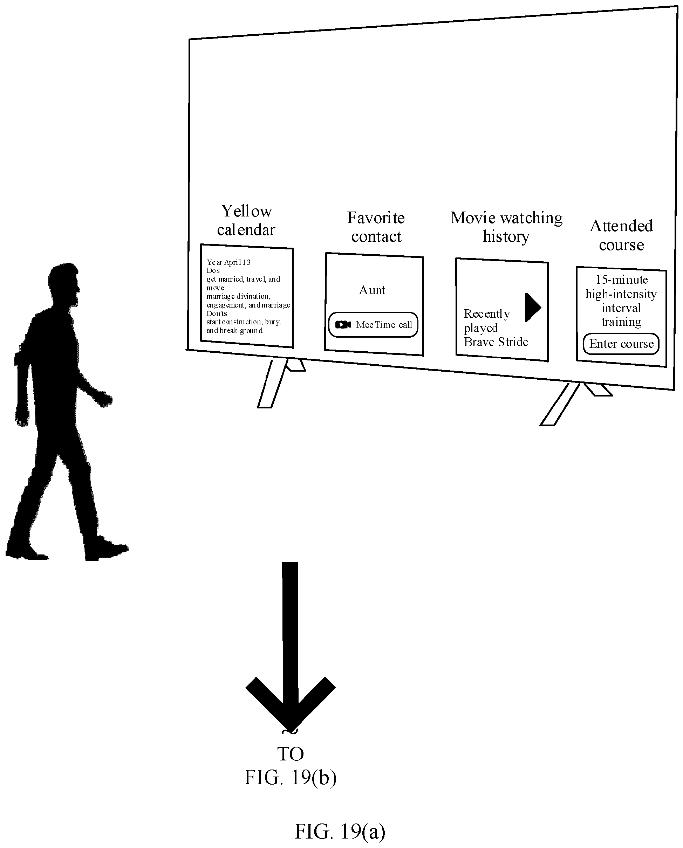

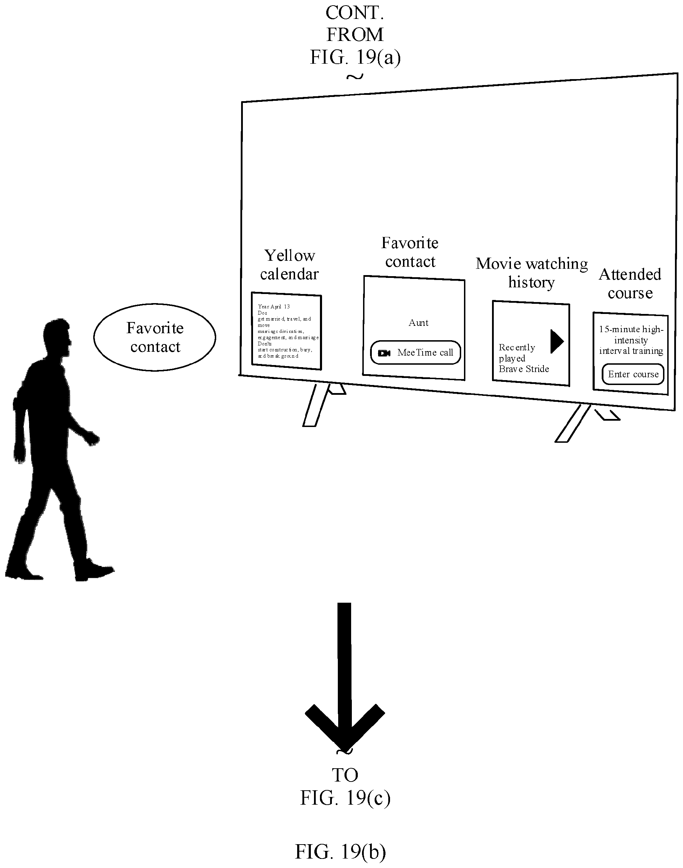

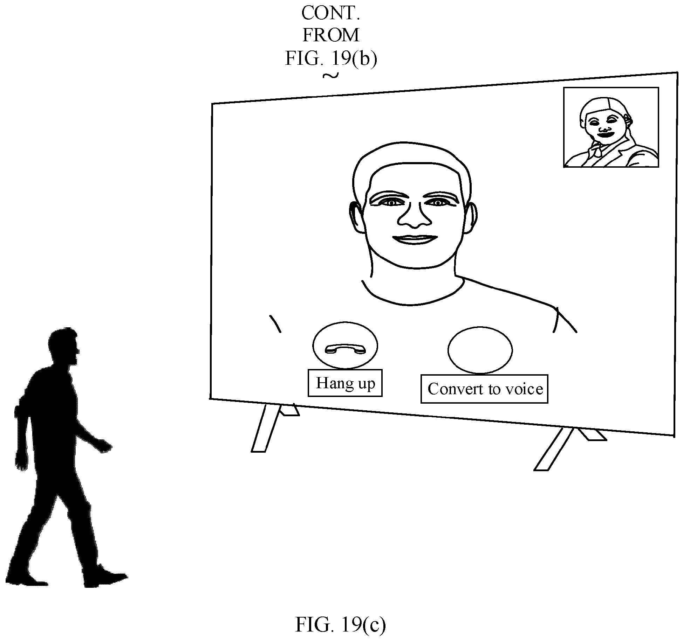

FIG. 19(a), FIG. 19(b), and FIG. 19(c) are a diagram of still another example of a method for starting an application according to an embodiment of this application. As shown in FIG. 19(a), after a user B approaches an electronic device, a display of the electronic device displays an application or a specific interface recently and frequently used by the user B. In this case, when the user B wants to quickly enter a "Favorite contact" and establish a MeeTime call with the aunt, the user B may read a text on a card in FIG. 19(b) to quickly open an interface for establishing the MeeTime call with the aunt, for example, an interface shown in FIG. 19(c).

In some embodiments, the user B may read a field displayed on the card, such as a sequence number, a control name, or a card title, to quickly open the interface for establishing the MeeTime call with the aunt.

Certainly, in addition to the methods for quickly starting an application provided in FIG. 16(a), FIG. 16(b), and FIG. 16(c) to FIG. 19(a), FIG. 19(b), and FIG. 19(c), the application may also be started in a manner of operating a remote control. For example, when the location of the focus on the display is a location of an application that the user wants to enter, the user may press an OK button on the remote control to enter the application.

Certainly, the operation of making the air gesture, the voice operation, the operation of approaching the electronic device by the user, or the operation of using the OK button of the remote control by the user may not only be performed to execute a function of entering an application or a program, but also implement a function of returning to an application or a program, or may implement switching between different applications or functions of a program.

According to the foregoing technical solutions, in a state in which the electronic device displays an application card, the gesture of the user may be captured by using the camera of the electronic device. When a gesture of the user is a preset gesture for starting an application, the application is quickly started. Alternatively, the distance between the electronic device and the user is measured by using a single-antenna UWB on the electronic device. When the distance between the electronic device and the user meets a preset condition, the application is quickly started. Alternatively, a voice indication of the user is obtained by using a microphone on the electronic device to quickly start the application. This method can help quickly enter a function of an application.

It should be understood that, in this application, the examples, the interfaces of the terminal, the operations of the user, and the like are merely examples, and do not constitute a specific limitation on embodiments of this application. For example, in some other embodiments of this application, the icons displayed on the interfaces of the foregoing provided terminals may include more or fewer icons than those displayed on the interfaces shown in any one of the foregoing figures, or some icons are combined, or some icons are split, or different icons are used. This is not limited herein in embodiments of this application.

It should be further understood that the solution shown in any one of the foregoing examples or in any one of the foregoing figures may be an independent solution, or the solution formed by combining any of the foregoing plurality of examples or the solution formed by combining any of a plurality of figures may be an independent solution. This is not limited herein in this application.

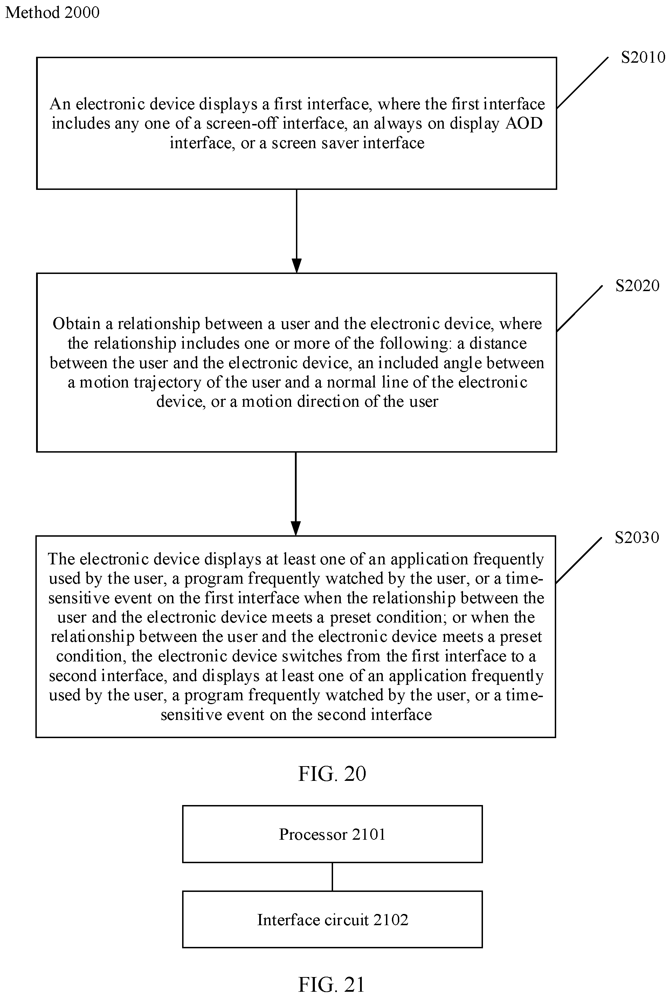

Based on the foregoing application scenarios, the electronic device shown in FIG. 1, and the foregoing examples, the following describes a step procedure of a display method of an electronic device provided in this application. The following describes a specific implementation process with reference to FIG. 20.

FIG. 20 is a schematic flowchart of an implementation of a display method 2000 of an electronic device according to an embodiment of this application. It should be understood that the steps shown in FIG. 20 may be implemented by the electronic device or a chip disposed in the electronic device. Specifically, the display method 2000 includes S2010 to S2030.

S2010: The electronic device displays a first interface, where the first interface includes any one of a screen-off interface, an always on display AOD interface, or a screen saver interface.

For example, the first interface may include the screen-off interface, the always on display AOD interface, and the screen saver interface. For example, for the first interface, refer to the display interface shown in FIG. 4(a), the display interface shown in FIG. 7(a), and the display interface shown in FIG. 8(a).

S2020: Obtain a relationship between a user and the electronic device, where the relationship includes one or more of the following: a distance between the user and the electronic device, an included angle between a motion trajectory of the user and a normal line of the electronic device, or a motion direction of the user.

It should be noted that, for a specific manner of how the electronic device obtains the distance between the user and the electronic device, the motion direction of the user, and the included angle between the motion trajectory of the user and the normal line of the electronic device, refer to the specific description corresponding to FIG. 4(a). Details are not described herein again.

S2030: The electronic device displays at least one of an application frequently used by the user, a program frequently watched by the user, or a time-sensitive event on the first interface when the relationship between the user and the electronic device meets a preset condition; or when the relationship between the user and the electronic device meets a preset condition, the electronic device switches from the first interface to a second interface, and displays at least one of an application frequently used by the user, a program frequently watched by the user, or a time-sensitive event on the second interface.

In a possible implementation, the preset condition may be at least one of the following: The distance between the user and the electronic device meets a first threshold, the included angle between the motion trajectory of the user and the normal line of the electronic device meets a second threshold, and the motion direction of the user is toward the electronic device.

For example, the first interface on which at least one of the application frequently used by the user, the program frequently watched by the user, or the time-sensitive event is displayed may be the display interface shown in FIG. 4(b), the display interface shown in FIG. 7(b), the display interface shown in FIG. 8(b), or the display interface shown in FIG. 12(b).

About how the electronic device determines whether the distance between the user and the electronic device meets the first threshold, whether the motion direction of the user is a direction toward the electronic device, and whether the included angle between the motion trajectory of the user and the normal line of the electronic device meets the second threshold, refer to the specific description corresponding to FIG. 4(a). Details are not described herein again.

Certainly, when the relationship between the user and the electronic device meets the preset condition, the electronic device may switch from the first interface to the second interface, and display at least one of the application frequently used by the user, the program frequently watched by the user, or the time-sensitive event on the second interface.

It should be understood that the second interface may be a screen-off interface, an always on display AOD interface, and a screen saver interface, but the second interface is different from the first interface. In other words, when the first interface is a screen-off interface, the second interface may be an always on display AOD interface or a screen saver interface; when the first interface is an always on display AOD interface, the second interface may be a screen-off interface or a screen saver interface; or when the first interface is a screen saver interface, the second interface may be a screen-off interface or an always on display AOD interface. For a display manner on the second interface, refer to a display manner on the first interface. Details are not described herein again.

In embodiments of this application, the electronic device displays the first interface. The first interface includes the screen-off interface, the always on display AOD interface, or the screen saver interface. The electronic device may sense the distance between the user and the electronic device, the motion trajectory of the user, and the included angle between the motion direction of the user and the normal line of the electronic device. When the distance between the user and the electronic device meets the first threshold, the motion trajectory of the user is the direction toward the electronic device, and the included angle between the motion direction of the user and the normal line of the electronic device meets the second threshold, the electronic device displays at least one of the application frequently used by the user, the program frequently watched by the user, or the time-sensitive event on the first interface; or the electronic device switches from the first interface to the second interface, and displays at least one of the application frequently used by the user, the program frequently watched by the user, or the time-sensitive event on the second interface. According to the method, a relative relationship between the user and the electronic device is used to achieve effect of quickly displaying an application or an interface frequently used by the user. The method simplifies an operation of starting an application, and further improves user experience.

In some example embodiments, the method further includes: When displaying at least one of the application frequently used by the user, the program frequently watched by the user, or the time-sensitive event on the first interface or the second interface, the electronic device obtains the relationship between the user and the electronic device; and when the relationship between the user and the electronic device does not meet the preset condition, the electronic device hides one or more of the following: the application frequently used by the user, the program frequently watched by the user, or the time-sensitive event on the first interface or the second interface; or the electronic device displays prompt information on the first interface or the second interface. For example, reference may be made to the display interface shown in FIG. 4(c), the display interface shown in FIG. 7(c), the display interface shown in FIG. 8(c), or the display interface shown in FIG. 12(b). In this implementation, when the user moves away from the electronic device, the electronic device hides or zooms out display content on the first interface or the second interface, and displays the screen-off interface, thereby reducing power consumption of the electronic device.

In some example embodiments, when the time-sensitive event is displayed on the first interface, and the relationship between the user and the electronic device meets the preset condition, the electronic device displays a message reminder box on the first interface, where the message reminder box indicates the time-sensitive event; or the electronic device switches from the first interface to the second interface, where a message reminder box is displayed on the second interface.

In some example embodiments, a display height of any one of the application frequently used by the user, the program frequently watched by the user, or the time-sensitive event is determined based on a relative height between the user and the electronic device. For example, reference may be made to the display height shown in FIG. 6(a) and FIG. 6(b). For a specific determining process, refer to the specific descriptions in FIG. 6(a) and FIG. 6(b). In this implementation, the relative height between the user and the electronic device is recognized to display any one of the application frequently used by the user, the program frequently watched by the user, or the time-sensitive event at a height that is convenient for the user to view. This improves user experience.

In some example embodiments, display content of any one of the application frequently used by the user, the program frequently watched by the user, or the time-sensitive event is determined based on user information, and different user information corresponds to different display content. For example, for displaying different content based on different users, refer to the display interface shown in FIG. 9(a) and FIG. 9(b). For a specific determining process, refer to the specific descriptions in FIG. 9(a) and FIG. 9(b). In this implementation, specific content is displayed for a specific user, so that the user more conveniently and quickly starts or opens an application or an interface that is most frequently used. This improves user experience.

In a possible implementation of a first aspect, when the time-sensitive event is displayed on the first interface or the second interface, the method further includes: obtaining indication information of the user, where the indication information indicates that the user has learned the time-sensitive event; and hiding, by the electronic device based on the indication information, one or more of the following: the application frequently used by the user, the program frequently watched by the user, or the time-sensitive event on the first interface or the second interface. In this implementation, after receiving that the user has learned the time-sensitive event, the electronic device hides the time-sensitive event on the display interface. This can reduce power consumption of the electronic device and save energy. For example, after the electronic device obtains the indication information of the user, the first interface may be the display interface in FIG. 13(d). In this implementation, when the user moves away from the electronic device, the electronic device displays the screen-off interface, thereby reducing power consumption of the electronic device and saving energy.

In a possible implementation of the first aspect, the electronic device displays one or more of the following: the application frequently used by the user, the program frequently watched by the user, or the time-sensitive event on the first interface or the second interface in at least one of a message prompt box, a task card, a floating window, or a floating ball.

In a possible implementation of the first aspect, before it is detected that the relationship between the user and the electronic device meets the preset condition, a first message prompt component is displayed on the first interface, where the first message prompt component includes first content, and the first content indicates at least one of the application frequently used by the user, the program frequently watched by the user, or the time-sensitive event; and that the electronic device displays at least one of an application frequently used by the user, a program frequently watched by the user, or a time-sensitive event on the first interface when the relationship between the user and the electronic device meets a preset condition includes: the electronic device displays a second message prompt component on the first interface when the relationship between the user and the electronic device meets the preset condition, where the second message prompt component displays content more detailed than the first content; or when the relationship between the user and the electronic device meets a preset condition, that the electronic device switches from the first interface to a second interface, and displays at least one of an application frequently used by the user, a program frequently watched by the user, or a time-sensitive event on the second interface includes: when the relationship between the user and the electronic device meets the preset condition, the electronic device switches from the first interface to the second interface, and displays a second message prompt component on the second interface, where the second message prompt component displays content more detailed than the first content. For example, when the first message prompt component may be a time-sensitive toast, and the second message prompt component may be a time-sensitive card, the first interface may be the display interface in FIG. 10(a), the display interface in FIG. 11(a), the display interface in FIG. 14(a), or the display interface in FIG. 15(a). When the relationship between the user and the electronic device meets the preset condition, a first electronic device displays a time-sensitive task card used to remind the user. For example, the first interface may be the display interface in FIG. 10(b), the display interface in FIG. 11(b), the interface in FIG. 14(a), or the interface in FIG. 15(a). In this implementation, when the user and the electronic device meet a condition, the electronic device is triggered to switch from the time-sensitive toast to the time-sensitive card, so that the user can browse detailed content of the time-sensitive event.

In some example embodiments, when the time-sensitive card is displayed on the first interface, and the relationship between the user and the electronic device does not meet the preset condition, the electronic device displays the time-sensitive toast on the first interface; or the electronic device switches from the first interface to the second interface, where the time-sensitive toast is displayed on the second interface. For example, when the time-sensitive card is displayed on the first interface, and the relationship between the user and the electronic device does not meet the preset condition, the first interface of the electronic device may be, for example, the display interface in FIG. 10(c) or the display interface in FIG. 14(d). In this implementation, when the user moves away from the electronic device, the electronic device displays the time-sensitive toast, so that the user is reminded again to process a to-do list.

In some example embodiments, the indication information of the user is obtained, where the indication information indicates that the user has learned the time-sensitive event; and based on the indication information, the electronic device hides one or more of the following: the application frequently used by the user, the program frequently watched by the user, or the time-sensitive event. For example, after the electronic device obtains the indication information of the user, the first interface of the electronic device may be the display interface shown in FIG. 11(d). For a specific operation process in which the electronic device displays the first interface based on the indication information of the user, refer to the specific description corresponding to FIG. 11(d). In this implementation, when the user moves away from the electronic device, the electronic device displays the screen-off interface, thereby reducing power consumption of the electronic device and saving energy.

In a possible implementation of the first aspect, when the first interface includes the time-sensitive toast, and the relationship between the user and the electronic device meets the preset condition, the method further includes: displaying a time-sensitive task card on the first interface, where the time-sensitive card displays detailed information of content of the time-sensitive toast; and displaying a plurality of task cards on the first interface after the time-sensitive task card is displayed, where the plurality of task cards include the time-sensitive task card. For example, as shown in FIG. 14(a), when the first interface includes the time-sensitive toast, and the relationship between the user and the electronic device meets the preset condition, as shown in FIG. 14(b), the time-sensitive task card is displayed on the first interface. After the time-sensitive task card is displayed, as shown in FIG. 14(c), a plurality of task cards are displayed on the first interface. In this implementation, an application or an interface frequently used by the user may be displayed after the time-sensitive event is displayed.

In some example embodiments, when the first interface includes the always on display AOD interface, the relationship between the user and the electronic device meets the preset condition, and the electronic device displays one or more of the following: the application frequently used by the user, the program frequently watched by the user, or the time-sensitive event on the first interface, an AOD of the electronic device is blurred or dimmed on the first interface. For example, as shown in FIG. 15(c), when the electronic device displays the yellow calendar, the favorite contact, the time-sensitive event, and the attended course on the first interface, the AOD of the electronic device is dimmed on the first interface. In this way, the user can clearly view content on the time-sensitive task card.

In some example embodiments, when the first interface includes the screen saver interface, the relationship between the user and the electronic device meets the preset condition, and the electronic device displays one or more of the following: the application frequently used by the user, the program frequently watched by the user, or the time-sensitive event on the first interface, a screen saver of the electronic device is blurred or dimmed on the first interface. In this implementation, the user can more intuitively view display information on the first interface.

In some example embodiments, when the electronic device displays one or more of the following: the application frequently used by the user, the program frequently watched by the user, or the time-sensitive event, the method further includes: obtaining a first operation of the user, where the first operation is used to open one or more of the following: the application frequently used by the user, the program frequently watched by the user, or the time-sensitive event; and in response to the first operation, opening one or more of the following: the application frequently used by the user, the program frequently watched by the user, or the time-sensitive event. For example, for an operation process in which the user makes an air gesture, refer to the user operation shown in FIG. 16(b); and for a process of recognizing the air gesture of the user, refer to the specific description corresponding to FIG. 16(b). In this implementation, the user may quickly enter an application or a specific interface by making an air gesture. In comparison with a case in which the user starts or opens an application or an interface by using a remote control, this implementation is more convenient and quicker, and user experience is better.

In some example embodiments, the method further includes: When the electronic device is on the second interface, the electronic device recognizes a first distance between the user and the electronic device; and when the electronic device determines that the first distance is less than a preset distance, the electronic device starts or opens an application or a specific interface corresponding to a check box of the electronic device. For example, for an operation process in which the user approaches the electronic device, refer to the user operation shown in FIG. 18(b); and for a process of determining the first distance between the user and the electronic device, refer to the specific description corresponding to FIG. 18(b). In this implementation, the user may quickly enter an application or a specific interface based on a distance from the electronic device. In comparison with a case in which the user starts or opens an application or an interface by using a remote control, this implementation is more convenient and quicker, and user experience is better.

In some example embodiments, the method further includes: When the electronic device is on the second interface, the electronic device obtains voice information of the user; and when the voice information of the user corresponds to information corresponding to a first task card on the second interface, the electronic device starts or opens an application or a specific interface corresponding to the first task card. For example, for an operation process in which the user opens the first task card based on the voice information, refer to the user operation shown in FIG. 19(b); and for a process of recognizing the voice information of the user, refer to the specific description corresponding to FIG. 19(b). In this implementation, the user may quickly enter an application or a specific interface based on voice information. In comparison with a case in which the user starts or opens an application or an interface by using a remote control, this implementation is more convenient and quicker, and user experience is better.

In some example embodiments, when the electronic device displays one or more of the following: the application frequently used by the user, the program frequently watched by the user, or the time-sensitive event, and a focus displayed by the electronic device is on a first application, a first program, or a first time-sensitive event, the method further includes: obtaining a second operation of the user; and in response to the second operation, displaying, by the electronic device, the focus on a second application, a second program, or a second time-sensitive event.

It should be understood that the application frequently used by the user includes the first application, the program frequently watched by the user includes the first program, and the time-sensitive event includes the first time-sensitive event.

Optionally, in response to the second operation, the focus displayed by the electronic device may move. For example, when the focus displayed by the electronic device is on the first application, in response to the second operation, the focus displayed by the electronic device moves to the second application, the second program, or the second time-sensitive event.

Optionally, in response to the second operation, the focus displayed by the electronic device does not move, and an application that needs to be switched, the program that is frequently watched by the user, or the time-sensitive event moves. For example, when the focus displayed by the electronic device is on the first application, in response to the second operation, the second application, the second program, or the second time-sensitive event moves to the focus displayed by the electronic device.

It should be further understood that the first application and the second application may be the same or different, the first program and the second program may be the same or different, and the first time-sensitive event and the second time-sensitive event may be the same or different. For example, when the focus displayed by the electronic device is on the first application, in response to the second operation, the focus displayed by the electronic device may also be on the first program or the first time-sensitive event. For example, for an operation process in which the user makes a waving gesture, refer to the user operation shown in FIG. 17; and for a process in which the electronic device recognizes the waving gesture made by the user, refer to the corresponding specific descriptions in FIG. 17. In this implementation, the user can quickly switch between different applications.

For example, the second operation may include at least one of a waving gesture, the user moving leftward or rightward, or using an arrow button of a remote control.

An embodiment of this application further provides a chip system. As shown in FIG. 21, the chip system includes at least one processor 2101 and at least one interface circuit 2102. The processor 2101 and the interface circuit 2102 may be connected to each other through a line. For example, the interface circuit 2102 may be configured to receive a signal from another apparatus (for example, a memory of any one of the foregoing terminal devices). For another example, the interface circuit 2102 may be configured to send a signal to another apparatus (for example, the processor 2101). For example, the interface circuit 2102 may read instructions stored in the memory, and send the instructions to the processor 2101. When the instructions are executed by the processor 2101, the terminal device may be enabled to perform the steps performed by any terminal device (for example, a mobile phone, a large-screen device, a tablet computer, an in-vehicle infotainment, or a PC) in the foregoing embodiments. Certainly, the chip system may further include another discrete device. This is not specifically limited in embodiments of this application.

An embodiment of this application further provides an apparatus. The apparatus is included in a terminal device, and the apparatus has a function of implementing behavior of the electronic device in any one of the foregoing embodiments. The function may be implemented by hardware, or may be implemented by hardware executing corresponding software. The hardware or the software includes at least one module or unit corresponding to the foregoing function.

An embodiment of this application further provides a computer storage medium, including computer instructions. When the computer instructions are run on a terminal device, the terminal device is enabled to perform the steps performed by the electronic device in any one of the foregoing embodiments.

An embodiment of this application further provides a computer program product. When the computer program product runs on an electronic device, the electronic device is enabled to perform the steps performed by the electronic device in any one of the foregoing embodiments.

An embodiment of this application further provides a graphical user interface on an electronic device. The electronic device includes a display, a camera, a memory, and one or more processors. The one or more processors are configured to execute one or more computer programs stored in the memory. The graphical user interface includes a graphical user interface displayed when the electronic device performs the steps performed by the electronic device in any one of the foregoing embodiments.

It can be understood that, to implement the foregoing functions, the terminal device includes corresponding hardware structures and/or software modules for executing the functions. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of this application.

In embodiments of this application, functional modules of the terminal device and the like may be obtained through division based on the foregoing method examples. For example, each functional module may be obtained through division in correspondence to each function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

Based on the descriptions of the foregoing implementations, a person skilled in the art may understand that, for a purpose of convenient and brief description, division into the foregoing functional modules is used as an example for illustration. During actual application, the foregoing functions may be allocated to different functional modules and implemented according to a requirement. In other words, an inner structure of an apparatus is divided into different functional modules to implement all or some of the functions described above. For a detailed working process of the foregoing system, apparatus, and unit, refer to a corresponding process in the foregoing method embodiments. Details are not described herein again.

Functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in embodiments of this application essentially, or the part contributing to the conventional technology, or all or some of the technical solutions may be implemented in a form of a software product. The computer software product is stored in a storage medium and includes several instructions for enabling a computer device (which may be a personal computer, a server, or a network device) or a processor to perform all or some of the steps of the methods described in embodiments of this application. The foregoing storage medium includes any medium that can store program code, for example, a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A display method of an electronic device, wherein the method comprises:
displaying, by the electronic device, a first interface, wherein the first interface comprises any one of a screen-off interface, an always on display AOD interface, or a screen saver interface;
obtaining a relationship between a user and the electronic device, wherein the relationship comprises one or more of the following: a distance between the user and the electronic device, an included angle between a motion trajectory of the user and a normal line of the electronic device, or a motion direction of the user; and
displaying, by the electronic device, at least one of an application frequently used by the user, a program frequently watched by the user, or a time-sensitive event on the first interface when the relationship between the user and the electronic device meets a preset condition; or when the relationship between the user and the electronic device meets a preset condition, switching, by the electronic device, from the first interface to a second interface, and displaying at least one of an application frequently used by the user, a program frequently watched by the user, or a time-sensitive event on the second interface.

2. The method according to claim 1, wherein the preset condition comprises at least one of the following: the distance between the user and the electronic device meets a first threshold, the included angle between the motion trajectory of the user and the normal line of the electronic device meets a second threshold, or the motion direction of the user is toward the electronic device.

3. The method according to claim 1 or 2, wherein the method further comprises:
in a case in which at least one of the application frequently used by the user, the program frequently watched by the user, or the time-sensitive event is displayed on the first interface or the second interface:
obtaining the relationship between the user and the electronic device; and
when the relationship between the user and the electronic device does not meet the preset condition, hiding, by the electronic device, one or more of the following: the application frequently used by the user, the program frequently watched by the user, or the time-sensitive event on the first interface or the second interface; or displaying, by the electronic device, prompt information on the first interface or the second interface.

4. The method according to any one of claims 1 to 3, wherein the method further comprises:
obtaining indication information of the user; and
hiding, by the electronic device based on the indication information, one or more of the following: the application frequently used by the user, the program frequently watched by the user, or the time-sensitive event on the first interface or the second interface.

5. The method according to any one of claims 1 to 4, wherein the electronic device displays one or more of the following: the application frequently used by the user, the program frequently watched by the user, or the time-sensitive event on the first interface or the second interface in at least one of a message prompt box, a task card, a floating window, or a floating ball.

6. The method according to any one of claims 1 to 5, further comprising:
before detecting that the relationship between the user and the electronic device meets the preset condition, displaying a first message prompt component on the first interface, wherein the first message prompt component comprises first content, and the first content indicates at least one of the application frequently used by the user, the program frequently watched by the user, or the time-sensitive event; and
the displaying, by the electronic device, at least one of an application frequently used by the user, a program frequently watched by the user, or a time-sensitive event on the first interface when the relationship between the user and the electronic device meets a preset condition comprises: displaying, by the electronic device, a second message prompt component on the first interface when the relationship between the user and the electronic device meets the preset condition, wherein the second message prompt component displays content more detailed than the first content; or
when the relationship between the user and the electronic device meets a preset condition, the switching, by the electronic device, from the first interface to a second interface, and displaying at least one of an application frequently used by the user, a program frequently watched by the user, or a time-sensitive event on the second interface comprises: when the relationship between the user and the electronic device meets the preset condition, switching, by the electronic device, from the first interface to the second interface, and displaying a second message prompt component on the second interface, wherein the second message prompt component displays content more detailed than the first content.

7. The method according to claim 6, wherein the first message prompt component is a time-sensitive toast, and the second message prompt component is a time-sensitive card.

8. The method according to claim 6 or 7, wherein the method further comprises:
when the relationship between the user and the electronic device does not meet the preset condition, resuming displaying, by the electronic device, the first message prompt component on the first interface; or switching, by the electronic device, from the second interface back to the first interface, and resuming displaying the first message prompt component on the first interface.

9. The method according to any one of claims 1 to 5, wherein when the first interface comprises a first time-sensitive task component, and the relationship between the user and the electronic device meets the preset condition, the method further comprises:
displaying a second time-sensitive task component on the first interface, wherein the second time-sensitive task component displays detailed information of content of the first time-sensitive task component; and
displaying a plurality of task components on the first interface in a process of displaying the second time-sensitive task component and zooming out the second time-sensitive task component, wherein the plurality of task components are different from the second time-sensitive task component.

10. The method according to any one of claims 1 to 9, wherein a display location on the electronic device that is of any one or more of the application frequently used by the user, the program frequently watched by the user, or the time-sensitive event is determined based on a relative location between the user and the electronic device.

11. The method according to any one of claims 1 to 10, wherein display content of any one or more of the application frequently used by the user, the program frequently watched by the user, or the time-sensitive event is determined based on user information, and different user information corresponds to different display content.

12. The method according to any one of claims 1 to 11, wherein when the electronic device displays one or more of the following: the application frequently used by the user, the program frequently watched by the user, or the time-sensitive event, the method further comprises:
obtaining a first operation of the user; and
in response to the first operation, opening one or more of the following: the application frequently used by the user, the program frequently watched by the user, or the time-sensitive event.

13. The method according to claim 12, wherein the first operation comprises at least one of an air gesture, a voice operation, the user approaching the electronic device, or using an OK button of a remote control.

14. The method according to any one of claims 1 to 11, wherein when the electronic device displays one or more of the following: the application frequently used by the user, the program frequently watched by the user, or the time-sensitive event, and a focus displayed by the electronic device is on a first application, a first program, or a first time-sensitive event, the method further comprises:
obtaining a second operation of the user; and
in response to the second operation, displaying, by the electronic device, the focus on a second application, a second program, or a second time-sensitive event.

15. The method according to claim 14, wherein the second operation comprises at least one of a waving gesture, the user moving leftward or rightward, or using an arrow button of a remote control.

16. An electronic device, wherein the electronic device comprises a processor and a memory, the memory is configured to store instructions, and the processor is configured to read the instructions to perform the method according to any one of claims 1 to 15.

17. A computer-readable storage medium, wherein the computer-readable storage medium stores a computer program, the computer program comprises program instructions, and when the program instructions are executed by a processor, the processor is enabled to perform the method according to any one of claims 1 to 15.

18. A chip, comprising a processor, configured to: invoke a computer program from a memory and run the computer program, to enable a communication device in which the chip is installed to perform the method according to any one of claims 1 to 15.
